# EUROPEAN PATENT APPLICATION

(11) **EP 4 530 077 A1**
(43) Date of publication of application: **02.04.2025**
(21) Application number: 24202848.8
(22) Date of filing: 26.09.2024
(51) Int. Cl.: B41J 2/165, B41J 29/38, B41J 29/393, G03G 15/00, G05F 1/66

(54) **PRINTING APPARATUS, CONTROL METHOD, AND PROGRAM**

(30) Priority: 29.09.2023 JP 2023169174; 03.06.2024 JP 2024089931
(71) Applicant: CANON KABUSHIKI KAISHA, Tokyo 146-8501 (JP)
(72) Inventor: FUJIMURA, Takahiro, Tokyo, 146-8501 (JP); FUKUMOTO, Takuji, Tokyo, 146-8501 (JP); YOSHIDA, Kenichi, Tokyo, 146-8501 (JP)
(74) Representative: TBK

(57) **Abstract**

Provided is a technique which, if external supply of electric power to a printing apparatus that can be driven with electric power stored therein stops, can reduce the effect of the stoppage on printing at the next activation. The printing apparatus includes: a connection unit (214) configured to connect to an external power source (16, 30, 34); an electric power storage unit (302, 304) configured to store electric power supplied from the external power source through the connection unit; a printing unit (206) configured to perform printing by ejecting an ink onto a print medium conveyed by a conveyance unit (402); a recovery unit (408) configured to perform a recovery operation of maintaining or restoring an ink ejection characteristic of the printing unit; and a control unit (216) configured to execute the recovery operation according to an amount of electric power stored in the electric power storage unit after the supply of electric power from the external power source stops.

## Description

### BACKGROUND OF THE INVENTION

### Field of the Invention

The present invention relates to a printing apparatus, a control method, and a program.

### Description of the Related Art

As a printing apparatus which performs printing by ejecting inks from a print head, a portable printing apparatus has been proposed which operates with electric power supplied from an external apparatus through an interface cable, such as a universal serial bus (USB) cable, for outdoor use and the like.

Japanese Patent Laid-Open No. 2017-205945 discloses a technique in which, at a timing to execute a sequence, electric power supplied from an external power source through a USB cable is stored in an electric power storage part and then the sequence is executed using the stored electric power.

Here, the user removes the interface cable from a printing apparatus at a timing to move the printing apparatus and the like. Also, the interface cable may be removed from the printing apparatus at unexpected timings for the user. Thus, there is a possibility that the timing to remove the USB cable may affect printing to be performed after the next activation of the printing apparatus in various ways.

Specifically, a printing operation is followed by capping for protecting the nozzle surface and a maintenance process for maintaining or restoring ink ejection characteristics at the nozzles. Here, in a case where the interface cable is removed immediately after the end of a sheet discharge process, during which the user can recognize that a printing operation is being performed, it will be impossible to store electric power for the capping and the maintenance process, which are executed after the sheet discharge process, and execute these processes. This leads to a possibility that the ink ejection characteristics of the print head may deteriorate.

Also, in a case where the interface cable is removed during a printing operation, the printing apparatus falls into an indefinite state in which the positions of members and the positions of print media in the printing apparatus and the like vary according to the timing of the removal. For this reason, the printing apparatus needs to execute an initialization process for recovering from the indefinite state at the next activation, which will require some time before becoming able to perform printing.

### SUMMARY OF THE INVENTION

The present invention in its first aspect provides a printing apparatus as specified in claims 1 to 19.

The present invention in its second aspect provides a control method as specified in claims 20 and 21.

The present invention in its third aspect provides a program as specified in claim 22.

In accordance with the present invention, in a case where external supply of electric power to a printing apparatus that can be driven with electric power stored therein stops, it is possible to reduce the effect of the stoppage on printing at the next activation.

Further features of the present invention will become apparent from the following description of exemplary embodiments with reference to the attached drawings.

### BRIEF DESCRIPTION OF THE DRAWINGS

Fig. 1 is a schematic diagram of a configuration of a printing system;
Fig. 2 is a block diagram illustrating a configuration of a control system in the printing apparatus;
Fig. 3 is a block diagram illustrating a configuration of a power supply system in the printing apparatus;
Fig. 4 is a schematic diagram of a configuration of a printing part;
Fig. 5 is a flowchart illustrating details of processing in a control process;
Fig. 6 is a flowchart illustrating details of processing in a control process executed in a second embodiment;
Fig. 7 is a flowchart illustrating details of processing in a control process executed in a third embodiment;
Fig. 8 is a flowchart of a post-discharge process as a sub-routine in the control process in Fig. 7;
Fig. 9 is a table illustrating information on maintenance processes;
Fig. 10 is a table illustrating amounts of electric power to be supplied according to connection standards;
Fig. 11 is a perspective view of a configuration of a printing apparatus 10;
Fig. 12 is a diagram explaining a conveyance system in the printing apparatus 10;
Fig. 13 is a flowchart illustrating details of processing in a control process executed in a fourth embodiment;
Fig. 14 is a table indicating pre-termination operations and activation-time operations corresponding to apparatus states;
Fig. 15 is a flowchart illustrating details of processing in a post-activation process;
Fig. 16 is a diagram illustrating an example of an indefinite state; and
Fig. 17 is a flowchart illustrating details of processing in a control process executed in a fifth embodiment.

### DESCRIPTION OF THE EMBODIMENTS

Examples of embodiments of a printing apparatus, a control method, and a program will be described below with reference to the accompanying drawings. Note that the following embodiments do not limit the present invention, and not all the combinations of the features described in these embodiments are necessarily essential for the solution to be provided by the present invention. Moreover, the positions, shapes, and the like of the constituent elements described in the embodiments are mere examples, and there is no intension to limit the present invention only to these.

### (First Embodiment)

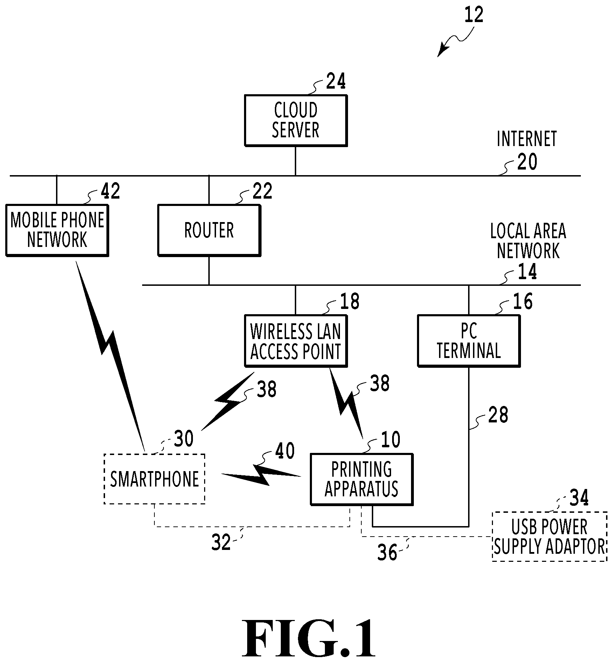

First, a printing apparatus according to a first embodiment will be described with reference to Figs. 1 to 5.

### <Printing System>

Fig. 1 is a schematic configuration diagram illustrating a printing system including the printing apparatus according to the present embodiment. A printing system 12 including a printing apparatus 10 according to the present embodiment includes the printing apparatus 10, which performs printing by ejecting inks, and a personal computer (PC) terminal 16 as an external apparatus connected to the printing apparatus 10 through a local area network (LAN) 14. Note that the printing system 12 includes a wireless LAN access point 18, and the printing apparatus 10 can connect to the LAN 14 by wirelessly connecting to the wireless LAN access point 18. The printing system 12 also includes a router 22 for connecting the LAN 14 to an Internet 20, and a cloud server 24 connected to the Internet 20. In this way, the printing apparatus 10 and the PC terminal 16 can communicate with the cloud server 24 connected to the Internet 20 through the router 22.

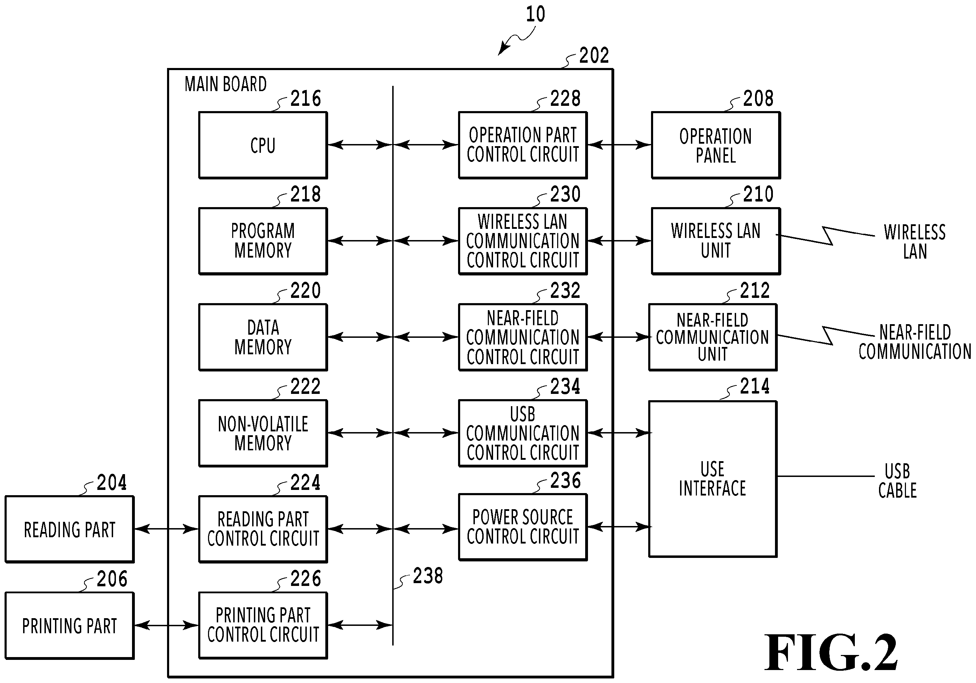

The printing apparatus 10 includes a USB interface 214 (see Fig. 2) and is configured to be connectable to various apparatuses. In the present embodiment, the printing apparatus 10 includes a USB interface 214 which a USB cable can be inserted into and removed from, and is connectable to the PC terminal 16 through a USB cable 28. In this way, the printing apparatus 10 is capable of operating with electric power supplied from the PC terminal 16 through the USB cable. As described above, in the present embodiment, the USB interface 214 functions as a connection part that connects to an external power source.

Also, in the printing system 12, a smartphone 30 can be used as an external apparatus. In this case, the smartphone 30 and the printing apparatus 10 are connected through a USB cable 32, and the printing apparatus 10 can operate with electric power supplied from the smartphone 30. Moreover, in the printing system 12, the printing apparatus 10 and a USB power supply adaptor 34 are connected through a USB cable 36, and the printing apparatus 10 can operate with electric power supplied from a commercial power source. While illustration is omitted, the configuration may be such that the printing apparatus 10 is connected to a mobile battery through a USB cable and is capable of operating with electric power supplied from the mobile battery.

The smartphone 30 and the printing apparatus 10 use wireless LAN infrastructure mode connections 38 with the wireless LAN access point 18. The printing apparatus 10 has a mode in which it operates as a wireless LAN access point. In a case where the printing apparatus 10 operates as an access point, the smartphone 30 can directly connect to the printing apparatus 10 (direct connection 40). Also, the smartphone 30 is capable of connecting to the cloud server 24, which is connected to the Internet 20, through a mobile phone network 42.

In a case where the printing apparatus 10 is connected to the PC terminal 16 and the smartphone 30 by USB cables, USB interfaces can be used for data communication between the printing apparatus 10 and the PC terminal 16 and the smartphone 30, but the data communication is not limited to this. The printing apparatus 10 can operate with electric power supplied from the PC terminal 16 and the smartphone 30 connected thereto by USB cables, and data communication can be executed using a wireless LAN and/or near-field communication. Note that the printing system 12 illustrated in Fig. 1 is an example of the printing system including the printing apparatus 10 according to the present embodiment, and may have a configuration different from the configuration illustrated in Fig. 1. For example, instead of the wireless LAN access point 18 and the router 22, a single configuration having these functions, e.g., a router having an access point function, may be used.

### <Configuration of Control System in Printing Apparatus>

Next, a configuration of a control system in the printing apparatus 10 will be described. Fig. 2 is a block diagram illustrating a configuration of the control system in the printing apparatus 10.

The printing apparatus 10 includes a main board 202 which performs comprehensive control of the printing apparatus 10, a reading part 204 which reads documents, a printing part 206 which performs printing on print media, and an operation panel 208 with which the user can perform operations. The printing apparatus 10 also includes a wireless LAN unit 210 for connecting to a wireless LAN, a near-field communication unit 212 for performing near-field communication, and the USB interface 214, which can be connected to a USB cable.

The main board 202 includes a central processing unit (CPU) 216 in the form of a microprocessor, a program memory 218 in the form of a read-only memory (ROM), a data memory 220 in the form of a random-access memory (RAM), and a non-volatile memory 222 capable of holding information saved therein even with no power supply. Also, the main board 202 includes a reading part control circuit 224 for controlling the reading part 204, a printing part control circuit 226 for controlling the printing part 206, and an operation part control circuit 228 for controlling the operation panel 208. Further, the main board 202 includes a wireless LAN communication control circuit 230 for controlling the wireless LAN unit 210, and a near-field communication control circuit 232 for controlling the near-field communication unit 212. Furthermore, the main board 202 includes a USB communication control circuit 234 that controls the driving of the USB interface 214, and a power supply control circuit 236 that controls the amount of electric power to be supplied from the USB interface 214. The components provided in the main board 202 are connected to one another by an internal bus 238.

The CPU 216 operates using the data memory 220 as a work area based on a control program stored in the program memory 218 and information held in the data memory 220. Also, by writing various setting values, data, and the like to the non-volatile memory 222, the CPU 216 can continuously operate in a case where the power source is turned off and then turned on again based on the setting values and data written to the non-volatile memory 222. A semiconductor storage device such as a flash memory can be used as the non-volatile memory 222, for example.

The CPU 216 controls the reading part 204 via the reading part control circuit 224 to read a document and stores the read data in the data memory 220 as image data. Also, the CPU 216 controls the printing part 206 via the printing part control circuit 226 to perform printing on a print medium based on print data obtained by performing image processing on image data stored in the data memory 220. Further, the CPU 216 can display the state of the printing apparatus 10 and display selectable functions in the form of a menu on the operation panel 208 and accept the user's operations on the operation panel 208, for example, by controlling the operation part control circuit 228.

The CPU 216 performs wireless LAN communication with other communication terminal apparatuses by controlling the wireless LAN unit 210 via the wireless LAN communication control circuit 230. Also the CPU 216 detects connections to other near-field communication terminals and sending and receiving data to and from the other near-field communication terminals by controlling the near-field communication unit 212 via the near-field communication control circuit 232. Further, the CPU 216 causes the USB interface 214 to operate via the USB communication control circuit 234 to perform USB communication with other terminal apparatuses connected thereto by USB cables (external apparatuses) and detect insertion and removal of the USB cables. Furthermore, the CPU 216 keeps track of and controls the amount of electric power supplied from the USB interface 214 and the amount of electric power stored in the power supply control circuit 236 by controlling the power supply control circuit 236. The CPU 216 may detect insertion and removal of USB cables via the power supply control circuit 236.

### <Configuration of Power Supply System in Printing Apparatus>

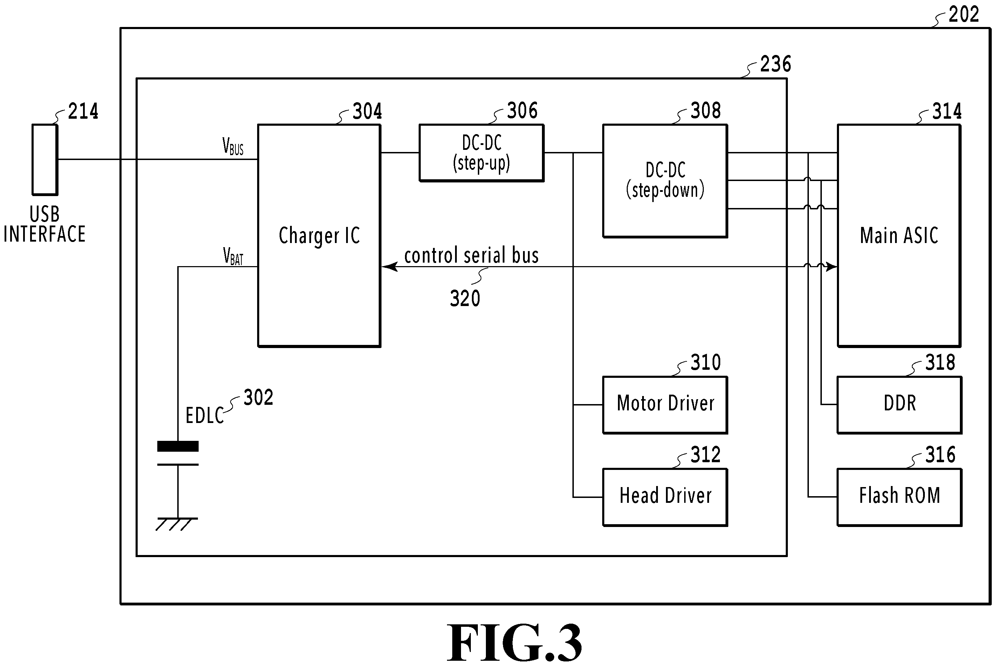

Next, a configuration of a power supply system in the printing apparatus 10 will be described. Fig. 3 is a block diagram illustrating the configuration of the power supply system in the printing apparatus 10.

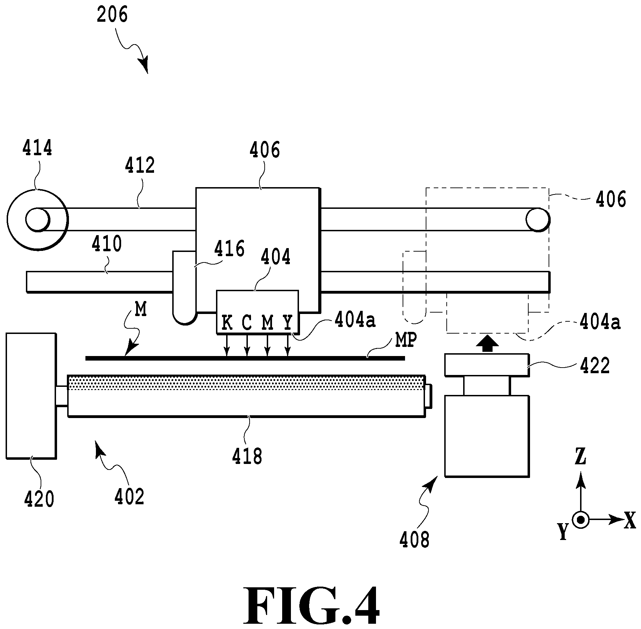

The power supply control circuit 236 includes an electrical double layer capacitor (EDLC) 302 that is capable of storing and supplying electric power, and a charger integrated circuit (IC) 304 that performs control of a current input therein and the like. Also, the power supply control circuit 236 includes a DC-DC (step-up) 306 being a booster circuit for raising a voltage from the charger IC 304, and a DC-DC (step-down) 308 being a buck circuit that lowers a voltage output from the DC-DC 306. Further, the power supply control circuit 236 includes a motor driver 310 that drives motors in the reading part 204 and the printing part 206, and a head driver 312 that drives a reading head (not illustrated) and a print head 404 (see Fig. 4).

The printing apparatus 10 is configured to be capable of being driven in response to input of a power source V_{BAT} from the EDLC 302 into the charger IC 304, and the power supply is control by a power supply system through the charger IC 304. That is, the printing apparatus 10 is configured to operate with electric power supplied from the EDLC 302. Specifically, the charger IC 304 electrically charges the EDLC 302 with a current supplied through a power source VBUS from the USB interface 214. At the same time, the charger IC 304 outputs electric power supplied from the EDLC 302 to a DC-DC (step-up) 306. The voltage raised by the DC-DC 306 is used by the motor driver 310 to drive the motors of the reading part 204 and the printing part 206. Also, the voltage raised by the DC-DC 306 is used by the head driver 312 to drive the reading head of the reading part 204 and the print head 404 of the printing part 206. In the power supply control circuit 236, the voltage raised by the DC-DC 306 is used to drive relatively large loads, as described above. Further, the power source raised by the DC-DC 306 is input into the DC-DC 308 to generate a logic power supply voltage to be used in an application-specific integrated circuit (ASIC) 314, a ROM 316, and a double data rate synchronous dynamic random-access memory (DDR SDRAM) 318. Note that the ASIC 314 is a customized IC including the CPU 216 and a peripheral circuit.

The charger IC 304 is an IC having a function of controlling the input current from the USB interface 214 and controlling the charging of the EDLC 302 and protecting it from abnormal operations. The charger IC 304 is capable of communicating with the ASIC 314 connected thereto by a control serial bus 320. Note that the control serial bus 320 forms part of the internal bus 238. In the present embodiment, the communication between the charger IC 304 and the ASIC 314 is performed by a universal asynchronous receiver transmitter (UART) method.

The charger IC 304 determines an input current suitable for the supply-source external apparatus (such as the PC terminal 16 or the smartphone 30). In the present embodiment, for example, the charger IC 304 performs a determination based on a determination complying with a USB-Battery Charging (BC) standard (BC determination) and a determination complying with a USB-Power Delivery (PD) standard (CC determination). Receiving the results of the BC determination and the CC determination from the charger IC 304, the ASIC 314 determines threshold values for the charging current, full-charge, over-discharge voltage, and the like for the charger IC 304, and sets the threshold values in the charger IC 304.

The EDLC 302 is an electrical double layer capacitor, and is subjected to charge control by the charger IC 304 in accordance with an instruction from the ASIC 314, and supplies electric power to the DC-DC 306, the motor driver 310, and the head driver 312 with the power source V_{BAT}. In the printing apparatus 10, in a case where the amount of electric power stored in the EDLC 302 falls below a certain value, for example, the EDLC 302 is charged with electric power supplied from the external apparatus connected through the USB interface. Note that, in the present embodiment, electric power can be supplied from the PC terminal 16, the smartphone 30, the USB power supply adaptor 34, and a mobile battery (not illustrated) connected to the printing apparatus 10 as external apparatuses. Specifically, the voltage of the power source V_{BAT} at the EDLC 302 can be sent to the ASIC 314 from the charger IC 304. For example, in a case where the voltage of the power source V_{BAT} at the EDLC 302 falls during a printing operation by the printing apparatus 10, the ASIC 314 issues an instruction to stop the printing operation and perform charge control until the voltage of the power source V_{BAT} at the EDLC 302 reaches a threshold value to the charger IC 304. Then, in response to receiving information indicating that the voltage of the power source V_{BAT} has reached the threshold value from the charger IC 304, the ASIC 314 resumes the printing operation. As described above, in the present embodiment, the charger IC 304 and the EDLC 302 function as an electric power storage part that stores electric power supplied from an external power source.

### <Configuration of Printing Part in Printing Apparatus>

Next, a configuration of the printing part 206 in the printing apparatus 10 will be described. Note that various publicly known components can be used for the reading part 204 in the printing apparatus 10, and description thereof is therefore omitted. Fig. 4 is a schematic diagram of the configuration of the printing part 206.

The printing part 206 includes a conveyance part 402 which conveys a print medium M in a Y direction, and the print head 404, which ejects inks onto the print medium M conveyed by the conveyance part 402 to perform printing. Also, the printing part 206 includes a carriage 406 on which the print head 404 is mounted and which is capable of moving in a direction (X direction) crossing (perpendicularly in the present embodiment) the conveyance direction of the print medium M conveyed by the conveyance part 402 (Y direction). Further, the printing apparatus 10 includes a maintenance part (recovery part) 408 capable of executing a maintenance process (referred to also as "recovery operation") for maintaining well or restoring the ink ejection performance at nozzles in the print head 404 which eject the inks.

The print head 404 is configured to be capable of ejecting multiple types of inks. Multiple sets of nozzles that eject respective inks are arrayed along a direction crossing the X direction to form nozzle arrays. In the present embodiment, the print head 404 is configured to be capable of ejecting four types of inks, namely, black (K), cyan (C), magenta (M), and yellow (Y) inks. Note that the types and number of inks to be ejected from the print head 404 are not limited to the above types and number. Also, the print head 404 may be configured to eject one or more types of liquids such as a process liquid with which to perform a predetermined process on the inks after being ejected.

The carriage 406 is slidably provided on a guide shaft 410 extending in the X direction and connected to a carriage motor 414 through a belt 412. In this way, the carriage 406 is capable of reciprocally moving in the X direction in response to being driven by the carriage motor 414. Thus, the print head 404 mounted on the carriage 406 is configured to be capable of reciprocally moving in the X direction with the carriage 406.

In a printing operation, driving pulses are applied to the print head 404 to thereby eject the inks from the print head 404 onto the print medium M while the carriage 406 is moved in the X direction, so that printing is performed for a single scan on a printing surface Mp of the print medium M. Note that the carriage 406 is provided with a detection part 416 capable of detecting the printing surface Mp of the print medium M. This enables the printing apparatus 10 to detect the printing surface Mp with the detection part 416 while moving the carriage 406 and thus monitor the result of printing on the printing surface Mp by the print head 404.

The conveyance part 402 includes a conveyance roller 418 that conveys the print medium M, and a conveyance motor 420 that drives the conveyance roller 418. Note that, in Fig. 4, the conveyance roller 418 and the print medium M are illustrated to be separated from each other in the Z direction in order to facilitate the understanding, but the print medium M and the conveyance roller 418 are actually in abutment with each other in the Z direction. The conveyance part 402 drives the conveyance motor 420 to convey the print medium M in the Y direction with the conveyance roller 418. In a case of performing printing on the print medium M based on a job, a printing operation is executed in which the inks are ejected from the print head 404 onto the print medium M conveyed to a print start position by the conveyance part 402 to perform printing for a single scan. Thereafter, a conveyance operation in which the print medium M is conveyed by a predetermined amount by the conveyance part 402 is performed, followed by a printing operation again. The printing apparatus 10 performs printing on a print medium based on a job by alternately repeating a printing operation and a conveyance operation.

The maintenance part 408 is disposed inside the area in which the carriage 406 moves in the X direction but outside the area in which the print head 404 perform printing on the print medium M in the X direction. The maintenance part 408 includes a cap part 422 that abuts on (caps) the print head 404 in order to protect a nozzle surface 404a of the print head 404. Incidentally, though not described or illustrated in detail, the maintenance part 408 includes various publicly known maintenance members, such as a suction part that performs suction to bring the inside of the cap part 422 to a negative pressure and a wiper part that wipes the nozzle surface 404a, for example. The nozzle surface 404a is a surface of the print head 404 which faces the printing surface Mp of the print medium M conveyed and in which nozzles for ejecting the inks are formed.

In capping with the cap part 422, the print head 404 is moved to a position at which the nozzle surface 404a faces the cap part 422 of the maintenance part 408 (a waiting position to be described later) (see the dashed-line portion in Fig. 4), and then the cap part 422 is raised. In the present embodiment, the print head 404 waits at the waiting position, at which the nozzle surface 404a faces the cap part 422, at timings such as when no printing operation is performed. By performing capping after printing based on a job is finished, it is possible to protect the nozzle surface 404a and also prevent evaporation of the inks' liquid components from the nozzles and thickening of the inks inside the nozzles due to the evaporation. Note that the ink ejection performance of the nozzles will still deteriorate even in a case where capping as above is performed. For this reason, the maintenance part 408 executes a maintenance process for maintaining the ejection performance well or recovering the ejection performance in response to an input from the user through the operation panel 208, for example. In the present embodiment, the configuration is such that the maintenance part 408 includes the cap part 422, but is not limited to this. The cap part 422 may be provided as a separate part from a maintenance part including a suction part and a wiper part.

### <Control Process>

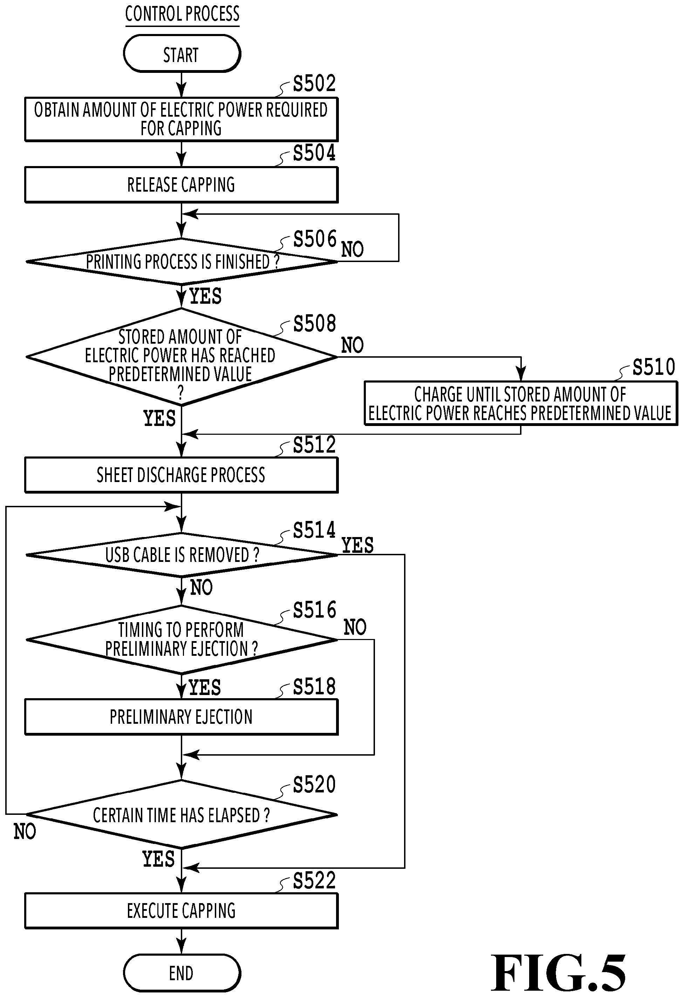

In the above configuration, the printing apparatus 10 executes a control process of controlling release and execution of capping on the print head 404 in parallel with a printing process of performing printing on a print medium M based on a job. Fig. 5 is a flowchart illustrating details of processing in the control process. The CPU 216 performs the series of processes illustrated in the flowchart of Fig. 5 by loading program code stored in the program memory 218 to the data memory 220 and executing it. Alternatively, the functions of some or all of the steps in Fig. 5 may be implemented with hardware such as an ASIC or an electric circuit. The sign "S" in the description of each process in a flowchart herein means a step in that flowchart.

The printing apparatus 10 starts the control process in response to an instruction to start a printing process. Upon start of the control process, first in S502, the CPU 216 obtains the amount of electric power required for capping from the non-volatile memory 222. In the present embodiment, data indicating the amount of electric power required for capping is stored in the non-volatile memory 222. The amount of electric power required for capping is the amount of electric power to be consumed in a case of capping the print head 404 with the cap part 422. The amount of electric power required for capping may be set individually for the printing apparatus 10, or measured and obtained when various settings of the printing apparatus 10 are configured.

Then, in S504, the CPU 216 releases the capping of the print head 404 by the cap part 422, that is, separates the cap part 422 from the print head 404. Note that the printing process executed in parallel with the control process is started after the capping of the print head 404 is released by a control unit. Thereafter, in S506, the CPU 216 determines whether the printing process is finished. Note that the CPU 216 determines that the printing process is finished at the timing at which the last printing in the printing process is finished. Also, in the printing process, the conveyance of the print medium is stopped at the timing at which the last printing is finished, for example. That is, the printing apparatus 10 is in a state where the print medium M is remaining therein when it is determined in S506 that the printing process is finished.

If determining in S506 that the printing process is not finished, the CPU 216 performs the determination in S506 again. Also, if determining in S506 that the printing process is finished, the CPU 216 proceeds to S508 and determines whether the amount of electric power stored in the EDLC 302 has reached a predetermined value. The predetermined value is an amount of electric power derived by adding a certain amount of electric power to the amount of electric power required for capping obtained in S502. Here, the certain amount of electric power is, for example, an amount of electric power combining the amount of electric power required for a sheet discharge process to be described later and the amount of electric power required for preliminary ejection to be executed within a predetermined time (corresponding to a certain time in S520 to be described later), or an amount of electric power larger than the above combined amount of electric power by a predetermined amount. The certain amount of electric power is a preset value. Note that the amount of electric power required for a sheet discharge process and preliminary ejection to be executed within the predetermined time may also be obtained in S502, and whether the amount of electric power stored in the EDLC 302 has reached the amount of electric power required for capping, a sheet discharge process, and preliminary ejection may be determined in S508. Note that the amount of electric power stored in the EDLC 302 is obtained based on the voltage of the power source V_{BAT} of the EDLC 302 at the charger IC 304, for example. Note that the technique for obtaining the amount of electric power stored in the EDLC 302 is not limited to the above, and various publicly known techniques can be used such as providing a detection unit capable of detecting the amount of electric power stored in the EDLC 302.

If determining in S508 that the amount of electric power stored in the EDLC 302 has reached the predetermined value, the CPU 216 proceeds to S512 to be described later. If determining in S508 that the amount of electric power stored in the EDLC 302 has not reached the predetermined value, then in S510, the CPU 216 charges the EDLC 302 until the amount of electric power stored therein reaches the predetermined value. The CPU 216 then proceeds to S512 and executes a sheet discharge process of discharging the print medium M after being printed. In this sheet discharge process, the print medium M remaining inside the printing apparatus 10 is discharged.

Next, in S514, the CPU 216 determines whether the USB cable is removed. In this description, "the USB cable is removed" includes a case where the USB cable connected to the printing apparatus 10 is removed from the printing apparatus 10 and a case where the USB cable is removed from the external power source. That is, "the USB cable is removed" is a case where the USB cable is removed and therefore the supply of electric power from the external power source stops. Note that, "the USB cable is removed" may include a case where the supply of electric power to the printing apparatus 10 from the external power source connected by the USB cable stops. Thus, in S514, the CPU 216 determines whether the USB cable for supplying electric power is removed from the USB interface 214 via the USB communication control circuit 234 or the power supply control circuit 236, for example. Also, in S514, the CPU 216 determines whether the EDLC 302 is currently being supplied with electric power from the external power source by checking the state of the input current control at the charger IC 304, for example. Thus, in a case where electric power is supplied to the printing apparatus 10 from the USB power supply adaptor 34 through the USB cable 36 in the printing system 12, the CPU 216 determines in S514 whether the USB cable 36 is removed from the USB interface 214.

If determining in S514 that the USB cable is removed, the CPU 216 proceeds to S522 to be described later. If determining in S514 that the USB cable is not removed, the CPU 216 proceeds to S516 and determines whether the timing to execute preliminary ejection has come. Note that the preliminary ejection refers to ink ejection from each nozzle not contributing to printing. The preliminary ejection is executed at intervals of a predetermined time, e.g., 30 seconds, after the sheet discharge process in S512. Thus, in S516, in a case where the determination is to be performed for the first time since the start of the control process, the CPU 216 determines whether the predetermined time has elapsed since the end of the sheet discharge process. Also, in S516, in a case where the determination is to be performed for the second or subsequent time since the start of the control process, the CPU 216 determines whether the predetermined time has elapsed since the last preliminary ejection. Note that when the sheet discharge process ends in S512, the CPU 216 starts counting time, and performs the determination in S516 based on this count value.

If determining in S516 that the timing to perform preliminary ejection has not come, the CPU 216 proceeds to S520 to be described later. If determining in S516 that the timing to perform preliminary ejection has come, the CPU 216 proceeds to S518 and executes preliminary ejection. At this time, the nozzle surface 404a is at such a position as to face the cap part 422 since the print head 404 has been moved to the waiting position after the end of the printing process. Thus, the inks are ejected into the cap part 422 in the preliminary ejection.

Thereafter, in S520, the CPU 216 determines whether a certain time has elapsed. In the present embodiment, the CPU 216 determines whether the certain time has elapsed since the end of the sheet discharge process in S512, for example. Thus, in S520, the CPU 216 determines whether the count value which the CPU 216 has started counting after the process of S512 has reached the certain time. The certain time is 10 minutes, for example, and may be changed as appropriate.

If determining in S520 that the certain time has not elapsed, the CPU 216 returns to S514. If determining in S520 that the certain time has elapsed, the CPU 216 proceeds to S522. In S522, the CPU 216 executes capping on the print head 404 at the waiting position with the cap part 422, and terminates this control process. In this control process, a certain amount of electric power corresponding to the amount of electric power required for capping and the amount of electric power required for a sheet discharge process and preliminary ejection is stored before the sheet discharge process is executed. Thus, when S522 is executed, at least the amount of electric power required for capping is stored in the EDLC 302. This makes it possible to reliably perform the capping in S522 with the electric power stored in the EDLC 302. As described above, in the present embodiment, the CPU 216 functions as a control part that controls the execution of capping and the charging of the EDLC 302.

### <Advantageous Effect>

As described above, the printing apparatus 10 is such that an amount of electric power that allows capping to be performed even in a case where the user removes the USB cable at any timing during or after a sheet discharge process is stored before the sheet discharge process, during which it is possible to recognize that the printing apparatus is still operating. Thus, an amount of electric power that allows capping to be performed is secured in the printing apparatus 10 when the user removes the USB cable, so that the capping of the print head 404 will be reliably executed. This prevents the deterioration in the ink ejection performance of the print head and reduces the effect on printing at the next activation.

### (Second Embodiment)

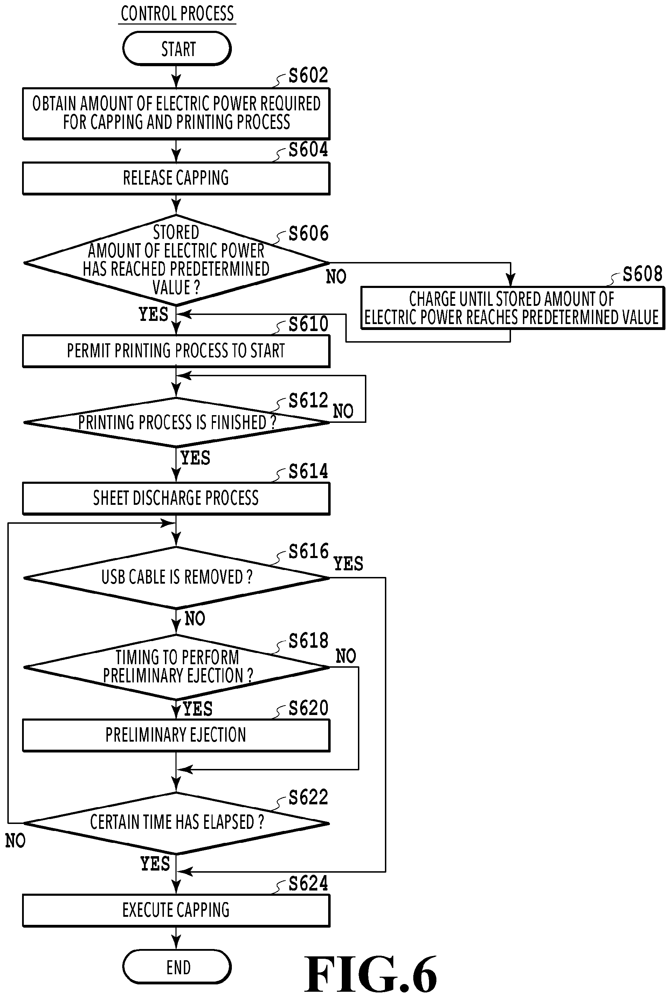

Next, a printing apparatus according to a second embodiment will be described with reference to Fig. 6. In the following description, for identical or corresponding components to those in the printing apparatus according to the above first embodiment, specific description thereof will be omitted by using the identical reference signs to those used in the first embodiment.

The second embodiment differs from the above first embodiment in that an amount of electric power that allows capping to be executed even in a case where the USB cable is removed after a sheet discharge process is executed is stored in the EDLC 302 before the printing process is executed. A control process executed by the printing apparatus 10 according to the present embodiment will be described in detail below.

### <Control Process>

Fig. 6 is a flowchart illustrating details of processing in the control process executed by the printing apparatus 10 according to the second embodiment. The CPU 216 performs the series of processes illustrated in the flowchart of Fig. 6 by loading program code stored in the program memory 218 to the data memory 220 and executing it. Alternatively, the functions of some or all of the steps in Fig. 6 may be implemented with hardware such as an ASIC or an electric circuit.

Upon start of the control process, first in S602, the CPU 216 obtains the amount of electric power required for capping and the amount of electric power required for a printing process. The CPU 216 obtains the amount of electric power required for capping from the non-volatile memory 222. The CPU 216 calculates the amount of electric power required for the printing process, i.e., the amount of electric power to be consumed in a case of executing the printing process, based on the job's settings, print data, and the like, for example.

Then, in S604, the CPU 216 releases capping of the print head 404 by the cap part 422. Thereafter, in S606, the CPU 216 determines whether the amount of electric power stored in the EDLC 302 has reached a predetermined value. In the present embodiment, the predetermined value is an amount of electric power derived by adding a certain amount of electric power to the amount of electric power required for capping and the amount of electric power required for the printing process obtained in S602. Here, the certain amount of electric power is an amount of electric power combining the amount of electric power required for a sheet discharge process to be described later and the amount of electric power required for preliminary ejection to be executed within a predetermined time (corresponding to a certain time in S622 to be described later), or an amount of electric power larger than the above combined amount of electric power by a certain amount. The certain amount of electric power is a preset value. Note that the amount of electric power required for a sheet discharge process and preliminary ejection to be executed within the predetermined time may also be obtained in S602, and whether the amount of electric power stored in the EDLC 302 has reached the amount of electric power required for capping, the printing process, a sheet discharge process, and preliminary ejection may be determined in S606.

If determining in S606 that the amount of electric power stored in the EDLC 302 has reached the predetermined value, the CPU 216 proceeds to S610 to be described later. If determining in S606 that the amount of electric power stored in the EDLC 302 has not reached the predetermined value, then in S608, the CPU 216 charges the EDLC 302 until the amount of electric power stored therein reaches the predetermined value. Thereafter, the CPU 216 proceeds to S610 and permits the printing process to start. In the present embodiment, the printing process, which is to be executed in parallel with this control process, is started after it is permitted in the control process.

Next, in S612, the CPU 216 determines whether the printing process is finished. If determining in S612 that the printing process is not finished, the CPU 216 performs the determination in S612 again. If determining in S612 that the printing process is finished, the CPU 216 proceeds to S614 and performs a sheet discharge process. Thereafter, in S616, the CPU 216 determines whether the USB cable is removed. If determining in S616 that the USB cable is removed, the CPU 216 proceeds to S624 to be described later. If determining in S616 that the USB cable is not removed, the CPU 216 proceeds to S618 and determines whether the timing to execute preliminary ejection has come.

If determining in S618 that the timing to perform preliminary ejection has not come, the CPU 216 proceeds to S622 to be described later. If determining in S618 that the timing to perform preliminary ejection has come, the CPU 216 proceeds to S620 and executes preliminary ejection. Note that the print head 404 is moved to the waiting position after the printing process. Thereafter, in S622, the CPU 216 determines whether a certain time has elapsed. If determining in S622 that the certain time has not elapsed, the CPU 216 returns to S616. If determining in S622 that the certain time has elapsed, the CPU 216 proceeds to S624. In S624, the CPU 216 executes capping on the print head 404 at the waiting position with the cap part 422, and terminates this control process. The details of processing in S616 to S624 are the same as S514 to S522 described above.

In this control process, a certain amount of electric power corresponding to the amount of electric power required for a printing process and capping and the amount of electric power required for a sheet discharge process and preliminary ejection is stored before the printing process is executed. Thus, when S624 is executed, at least the amount of electric power required for capping is stored in the EDLC 302. This makes it possible to reliably perform the capping in S624 with the electric power stored in the EDLC 302.

### <Advantageous Effect>

As described above, in the present embodiment, an amount of electric power that allows capping to be executed even in a case where the USB cable is removed at any timing after a sheet discharge process is stored before the printing process, during which the user can recognize that the printing apparatus is still operating. In this way, in the present embodiment, it is possible to obtain a similar advantageous effect to that of the above first embodiment.

### (Third Embodiment)

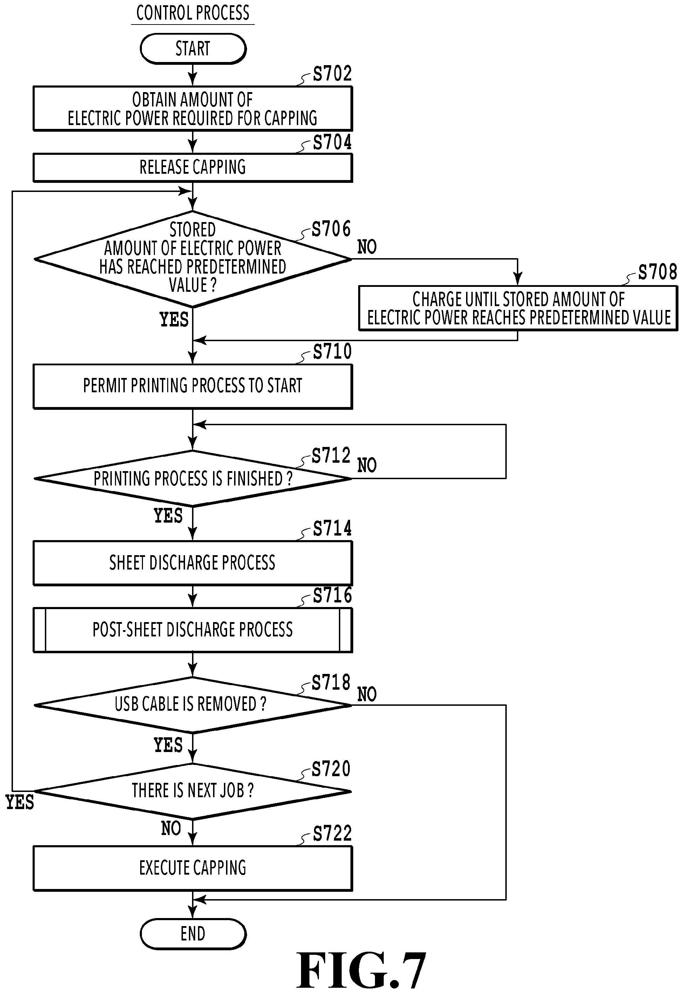

Next, a printing apparatus according to a third embodiment will be described with reference to Figs. 7 to 9. In the following description, for identical or corresponding components to those in the printing apparatus according to the above first embodiment, specific description thereof will be omitted by using the identical reference signs to those described in the first embodiment.

The third embodiment differs from the above first embodiment in that a maintenance process is executed according to the amount of electric power stored in the EDLC 302 even in a case where the USB cable is removed after a sheet discharge process is executed. Specifically, in the third embodiment, the printing apparatus 10 performs a control process of controlling the execution of capping and a maintenance process on the print head 404 in parallel with a printing process. The control process executed by the printing apparatus 10 according to the present embodiment will be described in detail below.

### <Control Process>

Fig. 7 is a flowchart illustrating details of processing in the control process executed by the printing apparatus 10 according to the third embodiment. The CPU 216 performs the series of processes illustrated in the flowchart of Fig. 7 by loading program code stored in the program memory 218 to the data memory 220 and executing it. Alternatively, the functions of some or all of the steps in Fig. 7 may be implemented with hardware such as an ASIC or an electric circuit. Note that the printing apparatus 10 is in a state where it can be supplied with electric power through the USB cable when the control process of Fig. 7 is executed.

Upon start of the control process, first in S702, the CPU 216 obtains the amount of electric power required for capping. Then, in S704, the CPU 216 releases capping of the print head 404 by the cap part 422. The details of processing in S702 and S704 are the same as S502 and S504, and description thereof is therefore omitted.

Thereafter, in S706, the CPU 216 determines whether the amount of electric power stored in the EDLC 302 has reached a predetermined value. In the present embodiment, the predetermined value includes the electric power required for capping obtained in S702, the electric power required for a printing process, and the electric power required for a sheet discharge process to be described later. Also, the predetermined value may be a value derived by adding a certain electric power to the sum of these electric powers. The electric power required for the printing process is obtained based on the job's settings and print data with the maximum amount of electric power per page, the amount of electric power for the size of the print medium, and the like stored in the non-volatile memory 222 or the program memory 218. That is, in S706, the CPU 216 calculates the predetermined value and compares the calculated predetermined value and the amount of electric power currently stored in the EDLC 302 to determine whether the stored amount of electric power has reached the predetermined value.

If determining in S706 that the amount of electric power stored in the EDLC 302 has reached the predetermined value, the CPU 216 proceeds to S710 to be described later. If determining in S706 that the amount of electric power stored in the EDLC 302 has not reached the predetermined value, then in S708, the CPU 216 charges the EDLC 302 until the amount of electric power stored therein reaches the predetermined value. Thereafter, the CPU 216 proceeds to S710 and permits the printing process to start. In the present embodiment, the printing process to be executed in parallel with this control process is started after it is permitted in this S710.

Next, in S712, the CPU 216 determines whether the printing process is finished. If determining in S712 that the printing process is not finished, the CPU 216 performs the determination in S712 again. If determining in S712 that the printing process is finished, the CPU 216 proceeds to S714 and performs a sheet discharge process. Specifically, in S714, the printed print medium currently present inside the printing apparatus 10 is discharged to the outside.

After finishing the sheet discharge process, the CPU 216 then proceeds to S716 and executes a post-sheet discharge process. The post-sheet discharge process is a process including a maintenance process for the print head 404, and details thereof will be described later. Thereafter, in S718, the CPU 216 determines whether the USB cable is removed. The details of processing in S718 are the same as S514 described above, and description thereof is therefore omitted.

If determining in S718 that the USB cable is removed, the CPU 216 terminates this control process. If determining in S718 that the USB cable is not removed, the CPU 216 proceeds to S720 and determines whether there is a next job. If determining in S720 that there is a next job, the CPU 216 returns to S706. If determining in S720 that there is no next job, the CPU 216 proceeds to S722 and executes capping on the print head 404 at the waiting position with the cap part 422, and terminates this control process.

### <Post-Sheet Discharge Process>

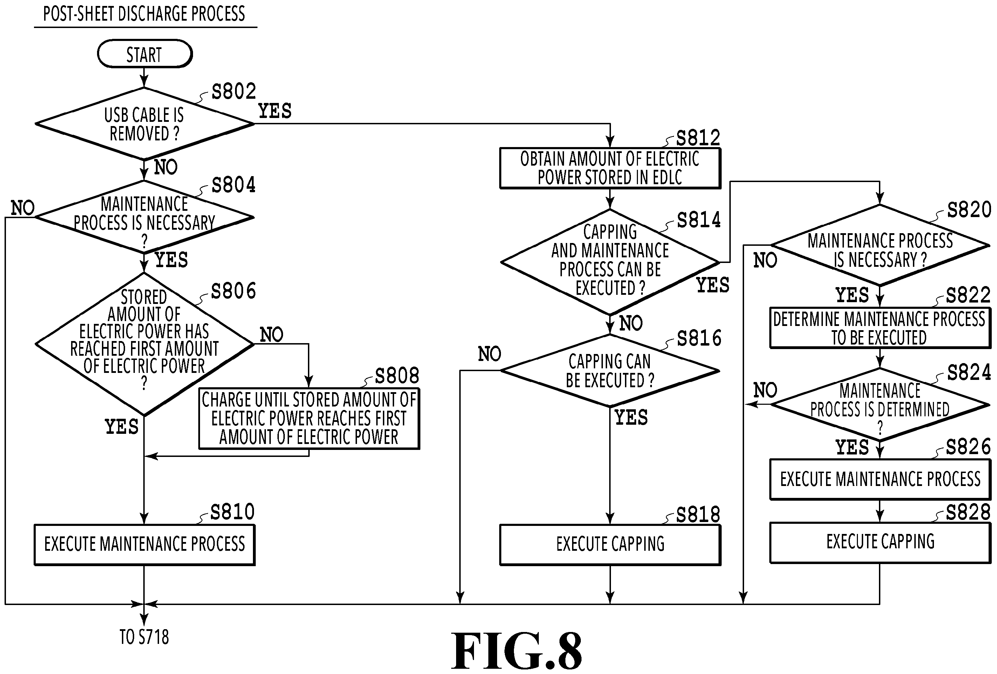

Next, the post-sheet discharge process executed in the control process will be described. Fig. 8 is a flowchart illustrating details of processing in the post-sheet discharge process as a sub-routine in the processing routine of the control process. The CPU 216 performs the series of processes illustrated in the flowchart of Fig. 8 by loading program code stored in the program memory 218 to the data memory 220 and executing it. Alternatively, the functions of some or all of the steps in Fig. 8 may be implemented with hardware such as an ASIC or an electric circuit.

Upon start of the post-sheet discharge process, first in S802, the CPU 216 determines whether the USB cable is removed. In S802, like S514, the CPU 216 determines whether the USB cable for supplying electric power is removed from the USB interface via the USB communication control circuit 234 or the power supply control circuit 236. Alternatively, the CPU 216 determines whether the EDLC 302 is currently being supplied with electric power from the external apparatus or the like by checking the state of the input current control at the charger IC 304. In this case, the CPU 216 determines that the USB cable is removed if determining that electric power is not being supplied, and determines that the USB cable is not removed if determining that electric power is being supplied.

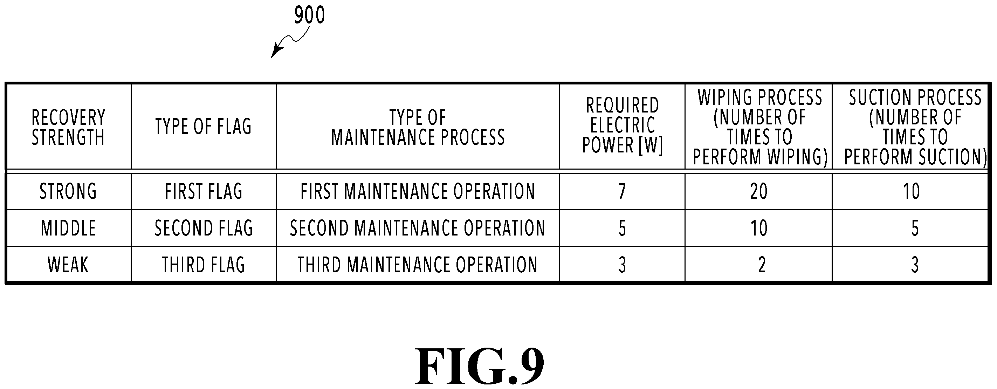

If determining in S802 that the USB cable is not removed, the CPU 216 proceeds to S804 and determines whether a maintenance process is necessary. Specifically, in S804, the CPU 216 determines whether a maintenance process after a discharge process is necessary and, if determining that such a maintenance process is necessary, obtains a type(s) of maintenance process(es) that can be executed. In the present embodiment, a table 900 indicating information on maintenance processes to be executed is held in the non-volatile memory 222, the program memory 218, or the like. In S804, using this table 900, the CPU 216 determines whether it is necessary to perform a maintenance process, and determines a maintenance process to be executed. Fig. 9 is the table illustrating the information on the maintenance processes.

In the table 900, a first flag is associated with a first maintenance process whose recovery strength, representing the maintenance effect, i.e., the effect of restoring ejection characteristics, is the highest. The amount of electric power required for the first maintenance process is 7 W. Details of processing in the first maintenance process include: performing a wiping process of wiping the nozzle surface (wiping operation) 20 times; and performing a suction process of sucking and discharging the inks out of the nozzles by depressurization with the cap part 422 (suction operation) 10 times.

Also, in the table 900, a second flag is associated with a second maintenance process whose recovery strength is middle. The amount of electric power required for the second maintenance process is 5 W. Details of processing in the second maintenance process include: performing a wiping process 10 times; and performing a suction process 5 times. Further, in the table 900, a third flag is associated with a third maintenance process whose recovery strength is the lowest. The amount of electric power required for the third maintenance process is 3 W. Details of processing in the third maintenance process include: performing a wiping process two times; and performing a suction process three times. As described above, in the table 900, the numbers of times to execute a suction process and a wiping process are changed to vary the recovery strength.

The amount of electric power required for each maintenance process is calculated from the amounts of operation of the constituent members and the content of the process. For example, in the present embodiment, the amount of electric power required for each maintenance process is obtained by integrating the amount of electric power required to perform a suction process once and the amount of electric power required to perform a wiping process once. Note that the information of the maintenance processes to be executed are set based on three levels of recovery strength in the table 900, but is not limited to this and may be set based on two or four or more levels of recovery strength. Also, the details of processing in each maintenance process are not limited only to a wiping process and a suction process, and various types of maintenance processes that are publicly known may be used.

In S804, using the table 900 as described above, the CPU 216 firstly determines which flag to turn on according to the state of the print head 404 that is based on the number of ejections in the last executed printing process, the elapsed time since the last executed printing process, and the like. In a case where a flag not to be turned on, the flag remains to be turned off. For example, in a case where the number of ejections exceeds a first value, the first flag is turned on to execute the first maintenance process, whose recovery strength is the highest. Also, in a case where the number of ejections is between the first value and a second value smaller than the first value, the second flag is turned on to execute the second maintenance process, whose recovery strength is middle. Further, in a case where the number of ejections is smaller than the second value, the third flag is turned on to execute the third maintenance process, whose recovery strength is the lowest. Note that turning on or off of each flag may be determined based on a combination of multiple conditions. Also, only one of the flags may be turned on, or multiple flags may be turned on.

Also, each flag's on or off state determined in S804 is stored in the non-volatile memory 222. In S804, the CPU 216 determines that a maintenance process is necessary if there is a flag(s) that is(are) turned on, and determines that no maintenance process is necessary if there is no flag that is turned on. Further, in S804, if it is determined that a maintenance process is necessary, the maintenance process corresponding to the flag with the highest recovery strength among the flags that are turned on is selected as the maintenance process to be executed.

If determining in S804 that no maintenance process is necessary, the CPU 216 proceeds to S718 in the control process. If determining in S804 that a maintenance process is necessary, the CPU 216 proceeds to S806 and determines whether the amount of electric power stored in the EDLC 302 has reached a first amount of electric power with which a maintenance process can be executed. That is, in S806, the CPU 216 determines whether or not the amount of electric power stored in the EDLC 302 is more than or equal to the amount of electric power required for the maintenance process determined in S804. For example, in a case where the first maintenance process is determined in S804, the CPU 216 determines in S806 whether or not the amount of electric power stored in the EDLC 302 is more than or equal to the amount of electric power required for the first maintenance process, which is 7 W. In S806, the CPU 216 determines that the amount of electric power stored in the EDLC 302 has reached the first amount of electric power if determining that the stored electric power is more than or equal to the amount of electric power required for the maintenance process. The CPU 216 determines that the amount of electric power stored in the EDLC 302 has not reached the first amount of electric power if determining that the stored electric power is less than the amount of electric power required for the maintenance process.

If determining in S806 that the amount of electric power stored in the EDLC 302 has reached the first amount of electric power, the CPU 216 proceeds to S810 to be described later. If determining in S806 that the amount of electric power stored in the EDLC 302 has not reached the first amount of electric power, the CPU 216 proceeds to S808 and charges the EDLC 302 until the amount of electric power stored therein reaches the first amount of electric power. Then, in S810, the CPU 216 executes the maintenance process determined in S804 and proceeds to S718 in the control process. Note that, in S810, the CPU 216 initializes the flags stored in the non-volatile memory 222, that is, turns the flags off, upon executing the maintenance process.

Now, the maintenance process executed in the present embodiment will be described. The suction process is a process of forcibly sucking and discharging thickened inks, bubbles, and foreign substances from the nozzles by generating a negative pressure inside the cap part 422 via driving the suction part connected to the cap part 422 with the print head 404 capped. The wiping process is a process of wiping off inks and foreign substances such as paper dust attached to the nozzle surface 404a of the print head 404 with a wiper.

In the present embodiment, such a maintenance process is executed after a sheet discharge process but is not limited to this. For example, a maintenance process may be executed at various publicly known timings other than after a sheet discharge process at which the maintenance process can be executed, such as before a printing process, when the elapsed time since the last printing process exceeds a predetermined time, at software-on after abnormal termination, and when the user gives an instruction.

In the present embodiment, a maintenance process is executed as the post-sheet discharge process to be executed after a sheet discharge process. This is advantageous in that a maintenance process to be executed at software-on or before execution of a printing process can be executed in advance, for example. That is, by executing a maintenance process after a sheet discharge process, the user will not have to wait at the start of a next printing process or software-on, so that the subsequent process can be executed efficiently.

If determining in S802 that the USB cable is removed, the CPU 216 proceeds to S812 and obtains the amount of electric power stored in the EDLC 302. Then, in S814, the CPU 216 determines whether capping and a maintenance process can be executed, that is, an amount of electric power with which capping and a maintenance process can be executed has been stored. As described above, in the printing apparatus 10, maintenance processes that can be executed and the amounts of electric power required for these maintenance processes are held in the non-volatile memory 222 (see Fig. 9). Also, in the printing apparatus 10, the amount of electric power required for capping is held in the non-volatile memory 222 as well.

Thus, in S814, first, the CPU 216 subtracts the amount of electric power required for capping from the amount of electric power stored in the EDLC 302 obtained in S812 to calculate the amount of electric power available for a maintenance process. Here, if the calculated value is 0 or less, the CPU 216 determines that an amount of electric power with which capping and a maintenance process can be executed is not stored. If the calculated value is more than 0, the CPU 216 compares this value with amounts of electric power required for maintenance processes. In the present embodiment, the calculated value is compared with "3" required to execute the first maintenance process, "5" required to execute the second maintenance process, and "7" required to execute the third maintenance process. If the result of the comparison indicates that the calculated value is more than at least one of the amounts of electric power required to execute the multiple maintenance processes, the CPU 216 determines that electric power with which capping and a maintenance process can be executed is stored. If the calculated value is less than at least one of the amounts of electric power required to execute the multiple maintenance processes, the CPU 216 determines that electric power with which capping and a maintenance process can be executed is not stored.

If determining in S814 that electric power with which capping and a maintenance process can be executed is not stored, the CPU 216 proceeds to S816 and determines whether capping can be executed, that is, electric power required for capping is stored. That is, in S816, the CPU 216 determines that electric power required for capping is stored if the amount of electric power stored in the EDLC 302 obtained in S802 is larger than the amount of electric power required for capping, and determines that electric power required for capping is not stored if the amount of electric power stored in the EDLC 302 obtained in S802 is smaller. If determining in S816 that electric power required for capping is not stored, the CPU 216 proceeds to S718 in the control process. If determining in S816 that electric power required for capping is not stored, the CPU 216 proceeds to S818 to execute capping, and proceeds to S718 in the control process.

Also, if determining in S814 that electric power with which capping and a maintenance process can be executed is stored, the CPU 216 proceeds to S820 and determines whether a maintenance process is necessary. In S820, like S804, the CPU 216 determines which flag to turn on according to the state of the print head 404 that is based on the number of ejections in the last executed printing process, the elapsed time since the last executed printing process, and the like. In S820, the CPU 216 determines that a maintenance process is necessary if one of the first to third flags is turned on, and determines that no maintenance process is necessary if all of the three flags are off.

If determining in S820 that no maintenance process is necessary, the CPU 216 proceeds to S718 in the control process. If determining in S820 that a maintenance process is necessary, the CPU 216 proceeds to S822 and determines the maintenance process to be executed. Here, suppose, for example, that the first flag is on in S820, the amount of electric power required for capping is 3 W, and the amount of electric power stored in the EDLC 302 obtained in S812 is 9 W. In this case, executing the first maintenance process will consume 3 W + 7 W = 10 W, which exceeds the amount of electric power stored in the EDLC 302 obtained in S812, or 9 W.

Accordingly, in S822, the CPU 216 determines the maintenance process with the highest recovery strength which can be executed with the amount of electric power derived by subtracting the amount of electric power required for capping from the amount of electric power stored in the EDLC 302 as the maintenance process to be executed. Specifically, the CPU 216 selects the maintenance process with the highest recovery strength in the table 900 which can be executed with the amount of electric power derived by subtracting the amount of electric power required for capping from the amount of electric power stored in the EDLC 302, and determines the selected maintenance process as the maintenance process to be executed. Note that, if there is not a maintenance process which can be executed with the amount of electric power derived by subtracting the amount of electric power required for capping from the amount of electric power stored in the EDLC 302, the CPU 216 does not determine the maintenance process to be executed or determines that there is no maintenance process to be executed.

Thereafter, in S824, the CPU 216 determines whether a maintenance process was determined in S822. If not determining the maintenance process to be executed or determining that there is no maintenance process to be executed in S822, the CPU 216 determines in S824 that the maintenance process to be executed has not been determined. If determining in S824 that no maintenance process has been determined, the CPU 216 proceeds to S718 in the control process. If determining in S824 that a maintenance process has been determined, the CPU 216 proceeds to S826 and determines the maintenance process determined in S822. Note that the CPU 216 initializes the flags, that is, turns the flags off, upon executing the maintenance process in S826. Thereafter, the CPU 216 executes capping in S828, and proceeds to S718 in the control process.

### <Advantageous Effect>

As described above, in the present embodiment, in a case where it is detected that the USB cable is removed in a post-sheet discharge process, it is determined whether or not the amount of electric power stored in the EDLC 302 at this point is more than or equal to an amount of electric power with which capping and a maintenance process can be executed. Then, capping is preferentially performed based on the amount of electric power stored in the EDLC 302 while a maintenance process that can be executed is executed. In this way, the printing apparatus 10 according to the present embodiment can prevent a deterioration in the ejection performance at the nozzles of the print head 404 even in a case where the USB cable is removed at a timing during or after a sheet discharge process. This reduces the effect on printing at the next activation of the printing apparatus 10.

### (Fourth Embodiment)

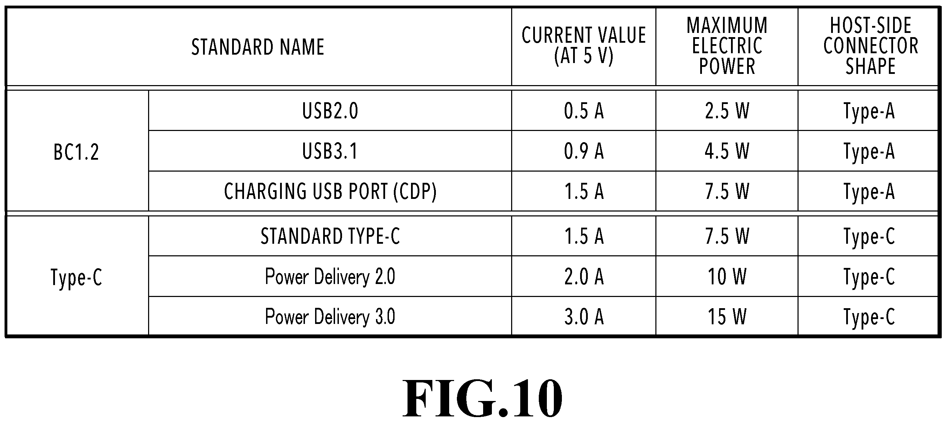

Next, a printing apparatus according to a fourth embodiment will be described with reference to Figs. 10 to 15. In the following description, for identical or corresponding components to those in the printing apparatus according to the above first embodiment, specific description thereof will be omitted by using the identical reference signs to those described in the first embodiment.

The printing apparatus 10 stops a printing process in a case where the USB cable is removed during the printing process, for example. Here, the positions of constituent members, the position of the print medium in the conveyance path, and the like inside the printing apparatus 10 vary depending on the timing at which the USB cable is removed or the timing at which the printing process is stopped, which leads to an indefinite state where the positions of the constituent members and the print medium inside the printing apparatus 10 are indefinite. Accordingly, the printing apparatus 10 will execute an initialization process for recovering from the indefinite state at the next activation. Thus, in the fourth embodiment, this process for recovering from the indefinite state is executed efficiently. A technique for efficiently executing the process for recovering from the indefinite state will be described in detail below.

### <Connection Standards>

First, connection standards for the printing apparatus 10 and external power sources (external apparatuses) will be described. Fig. 10 is a table illustrating amounts of electric power to be supplied according to connection standards.

BC1.2 is a USB-BC (Battery Charging) standard, and defines a method of electrically determining a charging USB port (CDP) using D+ and D- signal lines for USB port data communication. Also, in a case of a standard USB port that is not a charging port, communication is performed based on the USB standard after the end of the above detection, and the USB version can be determined through that communication.

Also, for USB Type-C, Power Delivery standards are defined, which allows notification of the amount of electric power supplied by communication with CC pins. Note that while the power supply voltage to be supplied can be controlled to be 5 V to 48 V with the Power Delivery standards, the maximum electric powers in Fig. 10 are values in a case of supplying 5 V

### (Schematic Configuration of Printing Apparatus)

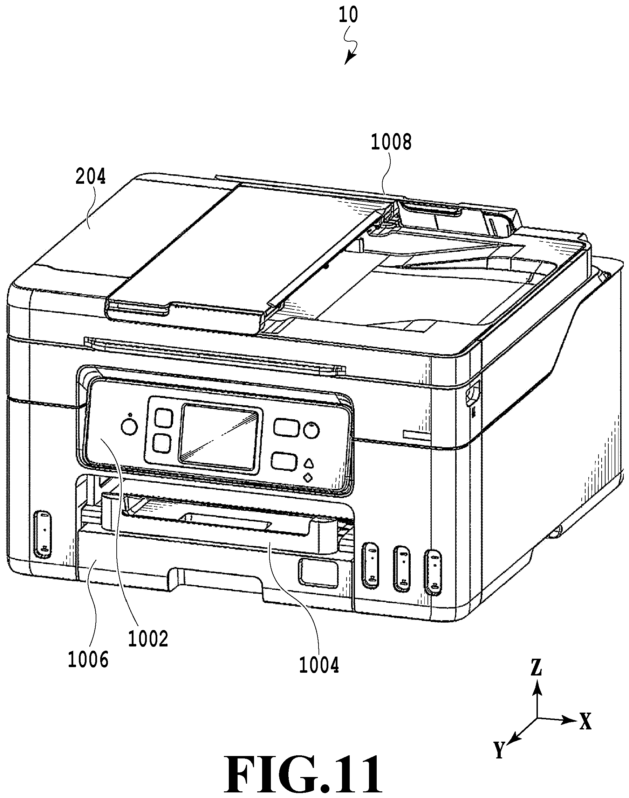

Next, a schematic configuration of the printing apparatus 10 will be described. Fig. 11 is a perspective view of a configuration of the printing apparatus 10.

The printing apparatus 10 includes an operation panel 1002 including a user interface such as buttons and a touch panel on the front side. Also, the printing apparatus 10 includes a discharge tray 1004 on which to discharge printed print media on the front side under the operation panel 1002. This discharge tray 1004 is configured to be movable in the Y direction and, in a case of performing printing, is drawn out from a retracted position (the position illustrated in Fig. 11) and set a drawn position for receiving discharged print media. Note that the printing apparatus 10 may include a sensor (not illustrated) that detects whether the discharge tray 1004 is at the drawn position.

The printing apparatus 10 includes a cassette 1006 that accommodates print media to be fed under the discharge tray 1004. Also, the printing apparatus 10 includes an auto sheet feeder (ASF) 1008 capable of feeding print media on an upper portion of the back side. Further, the printing apparatus 10 includes the reading part 204, such as a scanner, at the top.

### <Print Medium Conveyance System>

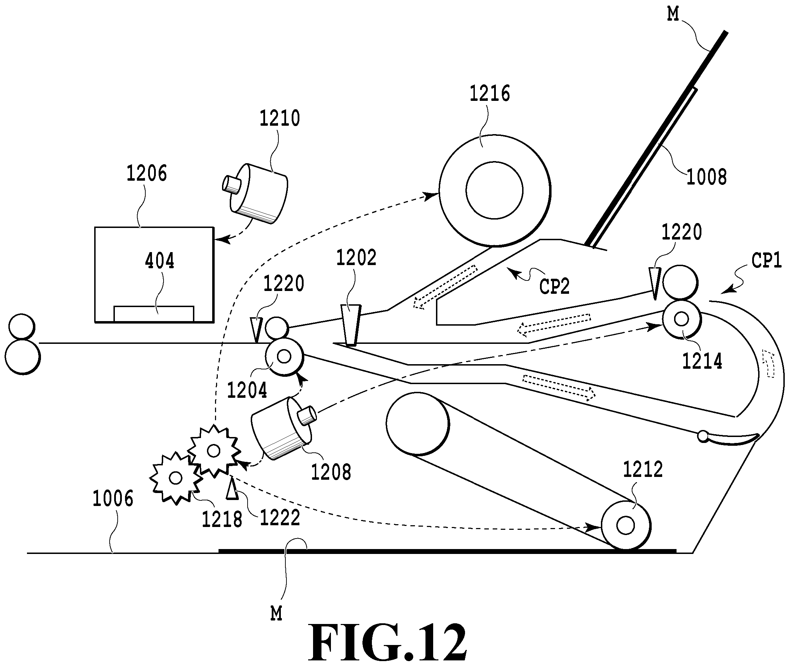

Next, a print medium conveyance system in the printing apparatus 10 will be described. Fig. 12 is a diagram explaining the conveyance system in the printing apparatus 10.

The printing apparatus 10 is configured such that a print medium M can be fed from the cassette 1006 and also a print medium M can be fed from the ASF 1008, as described above. Each of the print media M fed from the cassette 1006 and the ASF 1008 is fed to a position at which a detection sensor 1202 can detect it. Then, this print medium M is conveyed by a first conveyance roller 1204 (corresponding to the conveyance roller 418 in Fig. 4) to a position at which the print head 404 provided on a carriage 1206 (corresponding to the carriage 406 in Fig. 4) can perform printing on the print medium M. In a case where the print medium M is moved to this position, the printing apparatus 10 drives the print head 404, a conveyance motor 1208, and a carriage motor 1210 based on print data to perform printing on the print medium while conveying the print medium. Note that the conveyance motor 1208 corresponds to the conveyance motor 420 in Fig. 4, and the carriage motor 1210 corresponds to the carriage motor 414 in Fig. 4.

In the cassette 1006, a print medium M accommodated therein is fed to a first conveyance path CP1 by a cassette roller 1212 and conveyed toward the detection sensor 1202 by a second conveyance roller 1214 provided in the first conveyance path CP1. On the ASF 1008, a print medium M set thereon is pushed up until abutting on an ASF roller 1216, and then conveyed toward the detection sensor 1202 through a second conveyance path CP2 by the ASF roller 1216. Note that the first conveyance path CP1 and the second conveyance path CP2 join on the upstream side of the detection sensor 1202 in the conveyance direction of the print media M. In the present embodiment, the cassette roller 1212 and the ASF roller 1216 function as feeding rollers that feed print media.

The first conveyance roller 1204, the cassette roller 1212, the second conveyance roller 1214, and the ASF roller 1216 are each driven by the conveyance motor 1208. The first conveyance roller 1204 rotates forward as the conveyance motor 1208 rotates forward, and rotates backward as the conveyance motor 1208 rotates backward. The second conveyance roller 1214 rotates forward as the conveyance motor 1208 rotates forward and also as the conveyance motor 1208 rotates backward. That is, the driving force of the conveyance motor 1208 is transmitted to the second conveyance roller 1214 such that forward rotation and backward rotation of the conveyance motor 1208 will always rotate the second conveyance roller 1214 forward.

The driving force of the conveyance motor 1208 is transmitted to the cassette roller 1212 and the ASF roller 1216 through a switching mechanism 1218. The switching mechanism 1218 can selectively switch the transmission target of the driving force of the conveyance motor 1208 to the cassette roller 1212 or the ASF roller 1216, and can also transmit the driving force to neither of them. Also, the driving force of the conveyance motor 1208 is always transmitted to the first conveyance roller 1204 and the second conveyance roller 1214 without being affected by the switching of the driving target by the switching mechanism 1218. The switching mechanism 1218 switches the transmission target of the driving force by combining the driving of the first conveyance roller 1204 and the driving of the carriage 1206.

### <Control Process>

The printing apparatus 10 with the above configuration executes a control process of controlling the execution of an initialization process for recovering from the indefinite state after removal of the USB cable in parallel with a printing process of performing printing on a print medium M based on a job. In the present embodiment, a case where the control process is executed in parallel with a printing process will be described, but the control process may be executed in parallel with processes executed in the printing apparatus 10, such as a maintenance process. The control process is executed regardless of the state of the printing apparatus 10 except an error state in which the motor cannot be driven, for example.

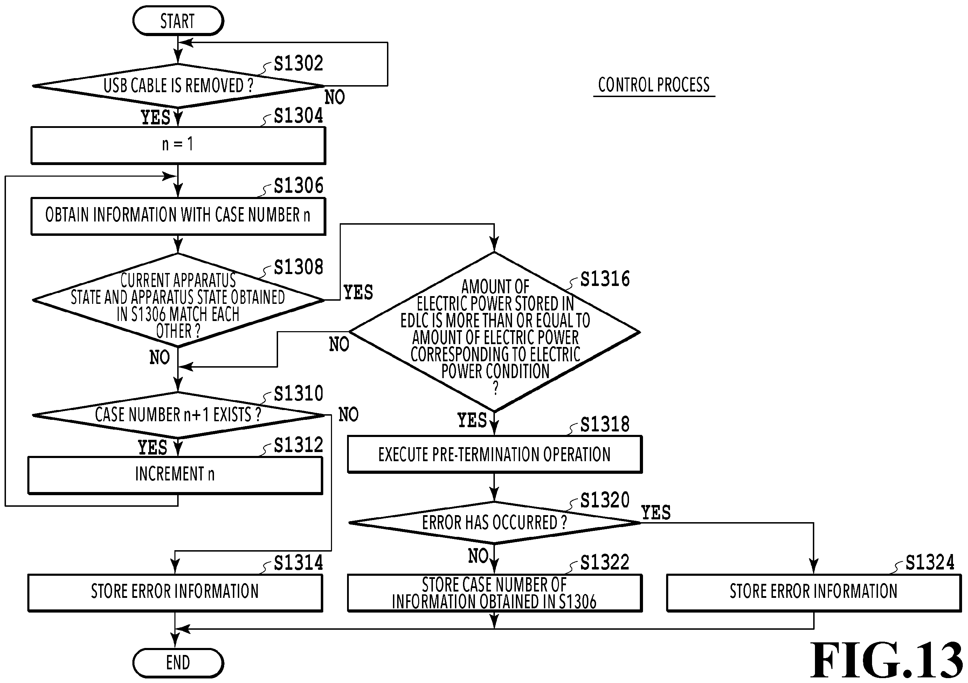

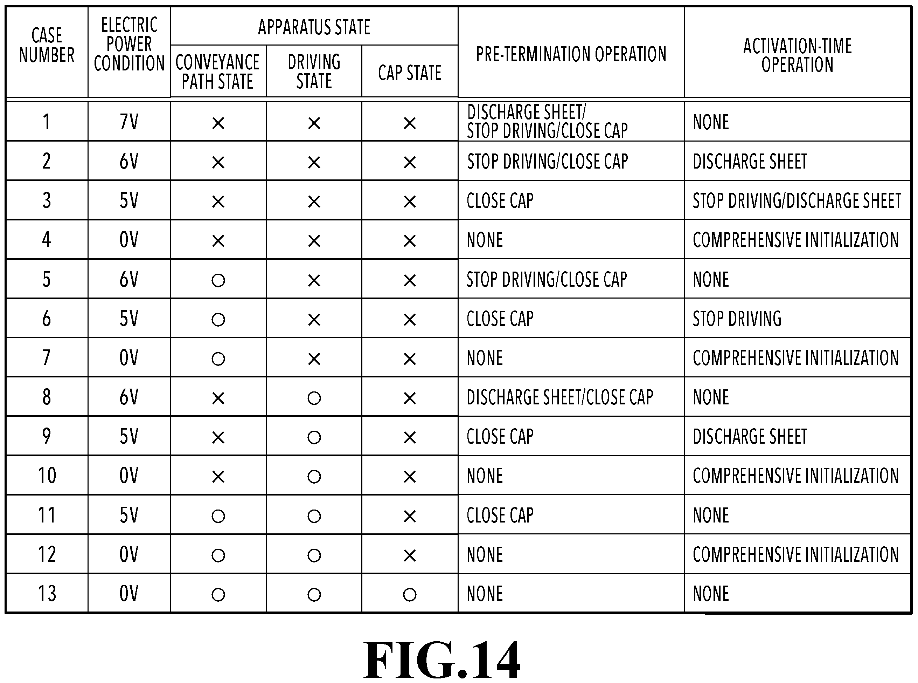

Fig. 13 is a flowchart illustrating details of processing in the control process executed by the printing apparatus 10 according to the fourth embodiment. Fig. 14 is a table in which the printing apparatus' states at removal of the USB cable are associated with initialization processes to be executed before the end of driving and at the next activation. The CPU 216 performs the series of processes illustrated in the flowchart of Fig. 13 by loading program code stored in the program memory 218 to the data memory 220 and executing it. Alternatively, the functions of some or all of the steps in Fig. 13 may be implemented with hardware such as an ASIC or an electric circuit.

Upon start of the control process, first in S 1302, the CPU 216 determines whether the USB cable is removed. Specifically, in S1302, like S802, the CPU 216 determines whether the USB cable for supplying electric power is removed from the USB interface via the USB communication control circuit 234 or the power supply control circuit 236. Alternatively, the CPU 216 determines whether the EDLC 302 is currently being supplied with electric power from the external apparatus or the like by checking the state of the input current control at the charger IC 304.

Next, in S1304, the CPU 216 sets a variable n to 1. The variable n indicates a case number in a table 1400 in which the printing apparatus' states at removal of the USB cable are associated with initialization processes to be executed before the end of driving (before power-off) and at the next activation. Then, in S1306, the CPU 216 obtains information of the case number n from the table 1400.

Now, the table 1400 will be described with reference to Fig. 14. The table 1400 shows information in which the printing apparatus' states (apparatus states) at removal of the USB cable are each associated with an initialization process to be performed before the end of driving (pre-termination operation), the amount of electric power required therefor (electric power condition), and an initialization process to be performed at the next activation (activation-time operation). Each piece of the information is given a case number. In the present embodiment, the electric power condition is a threshold value for the voltage of the power source V_{BAT} at the EDLC 302, but is not limited to this and may be an amount of electric power required to execute the pre-termination operation.

The apparatus state indicates whether an initialization process is necessary individually for each of three states being "conveyance path state", "driving state", and "cap state". For each state, "o" indicates that an initialization process is unnecessary (i.e., the same state as an initialized state). For each state, "×" indicates that an initialization process is necessary (i.e., a different state from the initialized state). For example, for the conveyance path state, "×" indicates a state where a print medium M is remaining in a conveyance path, while "o" indicates a state where no print medium is remaining in the conveyance paths. For the driving state, "×" indicates that the conveyance motor 1208 is connected to the cassette roller 1212 or the ASF roller 1216 by the switching mechanism 1218. Also, for the driving state, "o" indicates that the conveyance motor 1208 is connected to neither the cassette roller 1212 nor the ASF roller 1216 by the switching mechanism 1218. For the cap state, "×" indicates that the print head 404 is not capped, and "∘" indicates that the print head 404 is capped.

The pre-termination operation is an initialization operation to be executed as an initialization process before power-off due to removal of the USB cable. Also, the activation-time operation is an initialization operation to be executed as an initialization process when the power is turned on with electric power supplied through the USB cable. In the present embodiment, the pre-termination operation and the activation-time operation are a sheet discharge operation, a driving stop operation, and a capping operation. The sheet discharge operation is an operation of discharging a print medium M present in a conveyance path out of the conveyance path. Also, the driving stop operation is an operation of connecting the conveyance motor 1208 to neither the cassette roller 1212 nor the ASF roller 1216 with the switching mechanism 1218. That is, the driving stop operation is a switching operation in which the switching mechanism 1218 switches from a transmitting state of transmitting the driving force of the conveyance motor 1208 to both the cassette roller 1212 and the ASF roller 1216 to a non-transmitting state of not transmitting the driving force. Further, the capping operation is an operation of capping the print head 404 with the cap part 422. Note that the pre-termination operations and the activation-time operations are not limited to the above operations. For example, the pre-termination operations and the activation-time operations may include operations executed in various publicly known initialization processes such as an operation of initializing the states of a cam and the maintenance part.

In the present embodiment, in the table 1400, the above-described operations as initialization processes are sorted into the pre-termination operation and the activation-time operation according to the combination of the apparatus state and the electric power condition. In the present embodiment, the capping operation is preferentially executed. For example, in a case where all states in the apparatus state are "×" and the electric power condition is 7 V, which is sufficiently large, the above-described three operations as initialization processes are executed in the pre-termination operation, and no activation-time operation is executed. Also, in a case where all states in the apparatus state are "×" and the electric power condition is 0 V, no pre-termination operation is executed, and the above-described three operations as initialization processes are executed in the activation-time operation. Further, in a case where all states in the apparatus state are "×" and the electric power condition is 5 V or 6 V, at least the capping operation is executed in the pre-termination operation, and the operation(s) not executed in the pre-termination operation, i.e., the sheet discharge operation or the sheet discharge operation and the driving stop operation, is(are) executed in the activation-time operation.

As described above, in the table 1400, the larger the number of operations in the pre-termination operation, the smaller the number of operations in the activation-time operation, and the operation(s) executed in the pre-termination operation is(are) not performed in the activation-time operation. Accordingly, the activation-time operation will be done in a short time, making it possible to execute printing in a short time at the next activation of the printing apparatus.

If the power is turned off in a state where the USB cable is connected (that is, a state where electric power can be supplied through the USB cable), all states in the apparatus state are initialized, and the printing apparatus is turned off in a state where capping, which is the last operation, is performed. Also, in a case where the amount of electric power stored in the EDLC 302 is sufficient, the contents of the operations in the pre-termination operation will be similar to those in the case where the power is turned off in the state where the USB cable is connected, and there will be no activation-time operation (see the case number 1 in the table 1400).

In a case where the electric power condition 0 V, that is, the amount of electric power stored in the EDLC 302 when the USB cable is removed is 0 V or close to 0 V, it is assumed that not even capping can be performed in the pre-termination operation. Thus, a comprehensive initialization operation, which involves performing all initialization operations, will be performed in the activation-time operation (see the case numbers 4, 7, 10, and 12 in the table 1400).

In the table 1400, the case numbers and the pre-termination operations are set such that an operation(s) to be preferentially executed will be reliably performed. For example, capping is set to be preferentially performed in order to prevent drying of the print head 404. Note that the order of priority may be changed according to the apparatus states. For example, in a case where the USB cable is removed when a job is nearly finished, it is preferable to preferentially handle the conveyance path state over the driving state, that is, to preferentially discharge the print medium. Thus, pieces of information associated with the case numbers are made changeable. Also, in the present embodiment, the electric power required for sheet discharge is fixed. In reality, the position of a print medium in a conveyance path varies according to the timing at which the USB cable is removed. For this reason, the electric power required for sheet discharge may be dynamically calculated.

The description now returns to Fig. 13. Thus, in S1306, the CPU 216 obtains the information associated with the case number n in the table 1400, i.e., the electric power condition, the apparatus state, the pre-termination operation, and the activation-time operation. In S1306, the CPU 216 saves the obtained information (including the case number) in a storage area in the non-volatile memory 222 or the like. The CPU 216 then proceeds to S1308 and determines whether the current apparatus state and the apparatus state obtained in S1306 match each other. In S1308, first, the CPU 216 detects the current apparatus state, i.e., the current conveyance path state, driving stop state, and capping state. Note that, for the detection of each state, a sensor capable of detecting the state is provided, for example, the state is detected based on the detection result from this sensor. Note that, as for the technique for detecting each state, various publicly known techniques can be used. The CPU 216 then compares the detected current apparatus state and the apparatus state obtained in S1306, and determines that the current apparatus state and the apparatus state obtained in S1306 match each other if their conveyance path states, driving stop states, capping states all match each other. The CPU 216 determines that the current apparatus state and the apparatus state obtained in S1306 do not match each other if at least one of their conveyance path states, the driving stop states, or the capping states do not match each other.

If determining in S1308 that the current apparatus state and the apparatus state obtained in S1306 do not match each other, the CPU 216 proceeds to S1310 and determines whether a case number n+1 exists in the table 1400. If determining in S1310 that a case number n+1 exists in the table 1400, the CPU 216 proceeds to S1312 and increments the variable n, and proceeds to S1306. Here, the CPU 216 initializes the information associated with the case number n which was saved in a storage area in S1306. If determining in S1310 that the case number n+1 does not exist in the table 1400, the CPU 216 proceeds to S1314. In S1314, the CPU 216 stores error information indicating a failure to execute initialization processes based on the table 1400 in the non-volatile memory 222, and terminates this control process.

If determining in S1308 that the current apparatus state and the apparatus state obtained in S1306 match each other, the CPU 216 proceeds to S1316 and determines whether or not the amount of electric power stored in the EDLC 302 is more than or equal to the amount of electric power corresponding to the electric power condition obtained in S1306. In S1316, first, the CPU 216 obtains the amount of electric power currently stored in the EDLC 302. The CPU 216 then compares the obtained stored amount of electric power and the amount of electric power corresponding to the electric power condition obtained in S1306 to determine whether or not the above stored amount of electric power is more than or equal to the above amount of electric power.

If determining in S1316 that the amount of electric power currently stored in the EDLC 302 is not more than or equal to the amount of electric power corresponding to the electric power condition obtained in S1306, that is, the above stored amount of electric power is smaller than the above amount of electric power, the CPU 216 proceeds to S1310. If determining in S1316 that the amount of electric power currently stored in the EDLC 302 is more than or equal to the amount of electric power corresponding to the electric power condition obtained in S1306, the CPU 216 proceeds to S1318 and executes the pre-termination operation obtained in S1306. Thereafter, the CPU 216 proceeds to S1320 and determines whether an error has occurred as a result of executing the pre-termination operation. In S1320, the CPU 216 determines that an error has occurred, for example, in a case where a jam (paper jam) has occurred in a sheet discharge operation.

If determining in S1320 that no error has occurred, the CPU 216 proceeds to S1322 and stores the case number n corresponding to the information obtained in the immediately preceding S 1306 in the non-volatile memory 222, and terminates this control process. Note that information including the case number and associated with the case number has been stored in S1306. Thus, in this S1320, the CPU 216 stores only the case number and initializes other information. If determining in S1320 that an error has occurred, the CPU 216 proceeds to S1324 and stores information on the error that has occurred as a result of executing the pre-termination operation in the non-volatile memory 222, and terminates this control process. Here, the CPU 216 initializes the information associated with the case number n which was saved in a storage area in S1306.

Note that the CPU 216 powers off the printing apparatus 10 in the case of terminating the control process. Here, in a case where there is a process that needs to be executed at the power-off, the CPU 216 executes this process and then powers off the printing apparatus 10. Also, in response to powering off the printing apparatus 10 after performing the control process, power-off information indicating that the printing apparatus 10 was powered off in the control process is stored in a storage area in the non-volatile memory 222 or the like.

### <Post-Activation Process>

Next, a post-activation process to be executed immediately after activation of the printing apparatus 10 will be described. Through the control process described above, the printing apparatus 10 performs an operation corresponding to the amount of electric power stored in the EDLC 302 at a timing at which the USB cable is removed, to thereby simplify the content of the initialization process to be performed at the next activation of the printing apparatus 10. Thus, the printing apparatus 10 executes a post-activation process at the activation to perform the activation-time operation corresponding to the content of the pre-termination operation executed in the last control process.

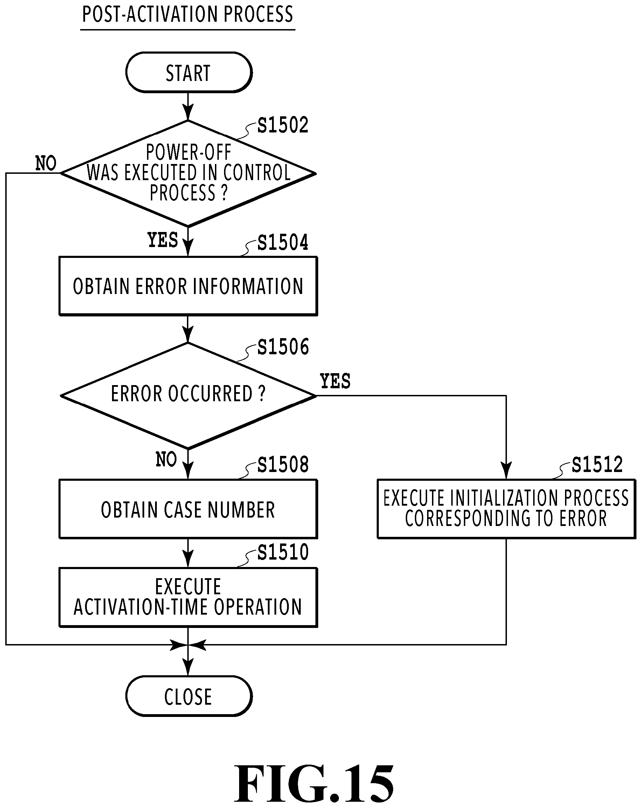

Fig. 15 is a flowchart illustrating details of processing in the post-activation process executed by the printing apparatus 10 according to the fourth embodiment. The CPU 216 performs the series of processes illustrated in the flowchart of Fig. 15 by loading program code stored in the program memory 218 to the data memory 220 and executing it. Alternatively, the functions of some or all of the steps in Fig. 15 may be implemented with hardware such as an ASIC or an electric circuit.

Upon start of the post-activation process, first, in S1502, the CPU 216 determines whether the last power-off of the printing apparatus 10 was executed by the control process. In a case where the USB cable is removed, the control process is executed, and the printing apparatus 10 is powered off by the control process. On the other hand, in a case where the USB cable is not removed or in a case of falling into an error state that cannot be determined by the control process, such as a case where the motor cannot be driven, a power-off corresponding to that case is executed. In a case where the power is turned off in the control process, power-off information indicating the power-off by the control process is stored in the non-volatile memory 222. Thus, in S1502, the CPU 216 determines whether power-off information is stored in the non-volatile memory 222. The CPU 216 determines that the last power-off was executed in the control process if power-off information is stored in the non-volatile memory 222, and determines that the last power-off was not executed in the control process if no power-off information is not stored.

If determining in S1502 that the last power-off was not executed by the control process, the CPU 216 terminates this post-activation process. If determining in S1502 that the last power-off was executed by the control process, the CPU 216 proceeds to S1504 and obtains the error information stored in the non-volatile memory 222 in the control process. Then, in S1506, the CPU 216 determines whether an error occurred in the control process. In S1506, the CPU 216 determines that an error occurred in the control process if obtaining error information from the non-volatile memory 222 in S1504. If no error occurred in the control process, no error information is stored in the non-volatile memory 222. Thus, if no error information is obtained from the non-volatile memory 222 in S1504, the CPU 216 determines in S1506 that no error occurred in the control process.

If determining in S1506 that no error occurred in the control process, the CPU 216 proceeds to S1508 and obtains the case number stored in the non-volatile memory 222 in the control process. Then, in S1510, using the case number obtained in S1508 and the table 1400, the CPU 216 obtains the activation-time operation and executes the obtained activation-time operation, and terminates this post-activation process. In S1510, the CPU 216 obtains the activation-time operation in the information associated with the case number in the table 1400 obtained in S1508, and executes the obtained activation-time operation. If determining in S1506 that an error occurred in the control process, the CPU 216 proceeds to S1512 and executes the initialization process corresponding to the occurred error, and terminates this post-activation process. Note that the initialization process corresponding to the error has been set in advance. Also, in a case of terminating the post-activation process, the power-off information, the case number stored in the non-volatile memory 222, the error information, and the like are initialized.

### <Advantageous Effects>

As described above, in the present embodiment, in a case where the USB cable of the printing apparatus 10 performing an operation for processing is removed, an operation(s) that can be executed among initialization processes is(are) executed according to the apparatus state and the amount of electric power stored in the EDLC 302 at that time, and then the power is turned off. Then, immediately after activation of the printing apparatus 10, the remaining operation(s) among the initialization processes is(are) executed according to operation(s) executed before the power-off.

In this way, in a case where the printing apparatus 10 according to the present embodiment is powered off due to removal of the USB cable and is then activated and performs printing, the time required for the initialization process to be executed will be short. This shortens the time before starting the printing. Also, as an initialization process to be executed in the case where the USB cable is removed, a capping operation is preferentially executed. This prevents a deterioration in ejection characteristics at the nozzles of the print head 404, and reduces the effect on the next printing.

### (Fifth Embodiment)

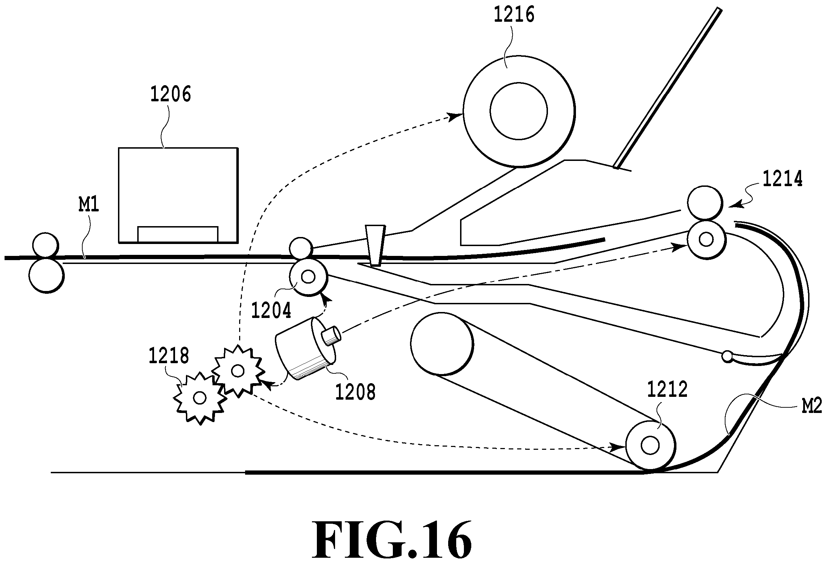

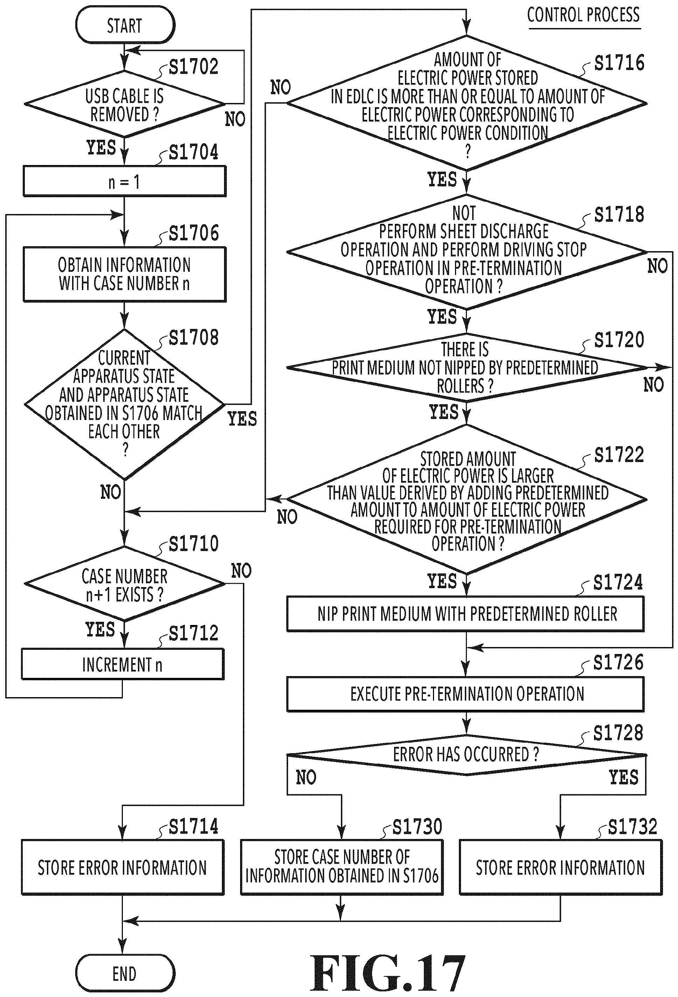

Next, a printing apparatus according to a fifth embodiment will be described with reference to Figs. 16 and 17. In the following description, for identical or corresponding components to those in the printing apparatus according to the above fourth embodiment, specific description thereof will be omitted by using the identical reference signs to those described in the fourth embodiment.

Fig. 16 is a diagram illustrating print media remaining inside a conveyance path in a case where the USB cable is removed during a printing process. Note that, although not particularly described in the above fourth embodiment, the first conveyance roller 1204 and the second conveyance roller 1214 each include a driving roller that rotates with the driving force of the conveyance motor 1208 and a driven roller that comes into pressure contact with the driving roller to be driven by the driving roller. Moreover, the first conveyance roller 1204 and the second conveyance roller 1214 each nips a print medium M with the driving roller and the driven roller and rotates to convey this print medium M.

In Fig. 16, a preceding print medium M1 is nipped by the first conveyance roller 1204, but a following print medium M2 has not reached the second conveyance roller 1214 and is being fed by the cassette roller 1212. In this state, it is possible to execute a driving stop operation with the electric power of the EDLC 302 but a sheet discharge operation may be impossible.

Specifically, suppose that, in a case where the USB cable is removed in the state of Fig. 16, for example, a driving stop operation and a capping operation are executed as a pre-termination operation to be executed in a control process, and a sheet discharge operation is executed in an activation-time operation to be executed in a post-activation process. In this case, in the sheet discharge operation in the activation-time operation, the preceding print medium M1 is discharged by the first conveyance roller 1204 while the following print medium M2, which has not reached the second conveyance roller 1214, needs to be conveyed by the cassette roller 1212. Here, due to the driving stop operation executed in the pre-termination operation, the switching mechanism 1218 is in such a state that it cannot transmit the driving force of the conveyance motor 1208 to the cassette roller 1212.

Thus, to discharge the print medium M2, the switching mechanism 1218 needs to be in such a state that it can transmit the driving force of the conveyance motor 1208 to the cassette roller 1212. Hence, in a case where the USB cable is removed in the state of Fig. 16, skipping the driving stop operation in the pre-termination operation will shorten the time required for the activation-time operation.

For this reason, in the present embodiment, in a case of skipping a sheet discharge operation and performing a driving stop operation in a pre-termination operation, a print medium that is not nipped by a roll that is driven by the conveyance motor 1208 regardless of whether a driving stop operation is performed or not, is conveyed to the position at which the print medium is to be nipped by this roll. Thereafter, a pre-termination operation is executed. A control process executed by the printing apparatus 10 in the present embodiment will be described in detail below.

### <Control Process>

Fig. 17 is a flowchart illustrating details of processing in the control process executed by the printing apparatus 10 according to the fifth embodiment. The CPU 216 performs the series of processes illustrated in the flowchart of Fig. 17 by loading program code stored in the program memory 218 to the data memory 220 and executing it. Alternatively, the functions of some or all of the steps in Fig. 17 may be implemented with hardware such as an ASIC or an electric circuit.

Upon start of the control process, in S1702, the CPU 216 determines whether the USB cable is removed. If determining in S1702 that the USB cable is removed, the CPU 216 sets the variable n to 1 in S1704. Then, in S1706, the CPU 216 obtains information of the case number n from the table 1400. Thereafter, in S1708, the CPU 216 determines whether the current apparatus state and the apparatus state obtained in S1706 match each other.

If determining in S1708 that the current apparatus state and the apparatus state obtained in S1706 do not match each other, the CPU 216 proceeds to S1710 and determines whether a case number n+1 exists in the table 1400. If determining in S1710 that a case number n+1 exists in the table 1400, the CPU 216 proceeds to S1712 and increments the variable n, and proceeds to S1706. If determining in S1710 that the case number n+1 does not exists in the table 1400, the CPU 216 proceeds to S1714. In S1714, the CPU 216 stores error information indicating a failure to execute initialization processes based on the table 1400 in the non-volatile memory 222, and terminates this control process.

If determining in S1708 that the current apparatus state and the apparatus state obtained in S1706 match each other, the CPU 216 proceeds to S1716 and determines whether or not the amount of electric power stored in the EDLC 302 is more than or equal to the amount of electric power corresponding to the electric power condition obtained in S1706. Note that the details of processing in S1702 to S1716 are the same as S1302 to S1316 described above, and specific description thereof is therefore omitted.

If determining in S1716 that the amount of electric power currently stored in the EDLC 302 is not more than or equal to the amount of electric power corresponding to the electric power condition obtained in S1706, the CPU 216 proceeds to S1710. If determining in S1716 that the amount of electric power currently stored in the EDLC 302 is more than or equal to the amount of electric power corresponding to the electric power condition obtained in S1706, the CPU 216 proceeds to S1718. In S1718, the CPU 216 determines whether the pre-termination operation obtained in S1706 is an operation involving not executing a sheet discharge operation and executing a driving stop operation. In the table 1400, the pre-termination operations under the case numbers 2 and 5 involve not executing a sheet discharge operation and executing a driving stop operation.

If determining in S1718 that the pre-termination operation obtained in S1706 is not an operation involving not executing a sheet discharge operation and executing a driving stop operation, the CPU 216 proceeds to S1726 to be described later. If determining in S1718 that the pre-termination operation obtained in S1706 is an operation involving not executing a sheet discharge operation and executing a driving stop operation, the CPU 216 proceeds to S1720 and determines whether there is a print medium M not nipped by predetermined rollers. In the present embodiment, the predetermined rollers are the first and second conveyance rollers 1204 and 1214, to which the driving force of the conveyance motor 1208 is transmitted regardless of whether a driving stop operation is performed or not. Also, the position of a print medium M in each conveyance path is detected based on the operation sequence of the process that was executed when the USB cable was removed.

If determining in S1720 that there is not a print medium M not nipped by the predetermined rollers, the CPU 216 proceeds to S1726 to be described later. If determining in S1720 that there is a print medium M not nipped by the predetermined rollers, the CPU 216 proceeds to S1722. In S1722, the CPU 216 determines whether the amount of electric power stored in the EDLC 302 obtained in S1716 is larger than a value derived by adding a predetermined amount to the amount of electric power required for the pre-termination operation (the amount of electric power corresponding to the electric power condition). The predetermined amount is calculated based on the distance from the position of the print medium M in the conveyance path obtained in S1720 to the predetermined roller that is located downstream of this position in the conveyance direction and situated the closest to the print medium M, and the amount of electric power (preset value) required to convey the print medium M over a predetermined distance.

If determining in S1722 that the amount of electric power stored in the EDLC 302 obtained in S1716 is smaller than the value derived by adding the predetermined amount to the amount of electric power required for the pre-termination operation, the CPU 216 proceeds to S1710. In this way, a pre-termination operation including a driving stop operation will not be performed in a case where the printing apparatus 10 is in the state illustrated in Fig. 16, for example. If determining in S1722 that the amount of electric power stored in the EDLC 302 obtained in S1716 is larger than the value derived by adding the predetermined amount to the amount of electric power required for the pre-termination operation, the CPU 216 proceeds to S1724. In S1724, the CPU 216 conveys the print medium M not nipped by the predetermined rollers and nips the print medium M with one of the predetermined rollers. That is, the CPU 216 moves the print medium M to such a position that it can be conveyed by the predetermined roller.

To nip the print medium M with the nearby predetermined roller, the print medium M only needs to be conveyed from the position of the print medium M obtained in S1720 to such a position that its leading edge passes the predetermined roller by a certain amount. Accordingly, the electric power required for this conveyance of the print medium M is significantly smaller than the electric power required for a sheet discharge operation of discharging the print medium M from the conveyance path. That is, in a case where there is not enough electric power to execute a sheet discharge operation but there is enough electric power to convey the print medium M to such a position as to nip the print medium M with a nearby predetermined roller, the print medium M is conveyed until being nipped by the predetermined roller before the pre-termination operation is executed. In this way, in the initialization operation after activation, a sheet discharge operation can be smoothly executed as an activation-time operation.

In the case of proceeding to S1726, the CPU 216 executes the pre-termination operation obtained in S1706. Thereafter, in S1728, the CPU 216 determines whether an error has occurred as a result of executing the pre-termination operation. If determining in S1728 that no error has occurred, the CPU 216 proceeds to S1730 and stores the case number n corresponding to the information obtained in the immediately preceding S1706 in the non-volatile memory 222, and terminates the control process. If determining in S1728 that an error has occurred, the CPU 216 proceeds to S1732 and stores information on the error that has occurred as a result of executing the pre-termination operation in the non-volatile memory 222, and terminates this control process. The details of processing in S1726 to S1732 are the same as S1318 to S1324 described above, and specific description thereof is therefore omitted.

Here, in a case where there is a process that needs to be executed at power-off when the control process is terminated, the CPU 216 executes this process and then powers off the printing apparatus 10. Also, in response to powering off the printing apparatus 10 after performing the control process, information indicating that the printing apparatus 10 was powered off in the control process is stored in a storage area in the non-volatile memory 222 or the like.

### <Advantageous Effects>

As described above, in the present embodiment, in a case of not executing a sheet discharge operation and executing a driving stop operation in a pre-termination operation, it is determined whether the print medium M is nipped by a predetermined roller that can be driven regardless of whether a driving stop operation is performed or not. Then, in a case where it is determined that the print medium M is not nipped by the predetermined roller, the pre-termination operation is executed after conveying the print medium M to such a position that the predetermined roller can nip the print medium M. This allows for similar advantageous effects to those of the fourth embodiment described above, and also makes it possible to smoothly execute a sheet discharge process in an activation-time operation and thus shorten the time it takes before performing printing after activation and reduce the effect on the printing.

### (Other Embodiments)

Note that the above embodiments may be modified as described in (1) to (12) below.
(1)In the above first and second embodiments, an amount of electric power is stored in the EDLC 302 with which capping can be executed even in a case where the USB cable is removed at any timing after a sheet discharge process after the end of a printing process or before the start of the printing process, but the present invention is not limited to this. Specifically, the process to which the present invention is applicable is not limited to a printing process. For example, the present invention is applicable to predetermined processes that are executed after capping of the print head 404 is released, such as a maintenance process, a mechanical initialization process such as determining the home position of the carriage 406, and the like. In a case of applying the present invention to a maintenance process, examples of a process corresponding to the sheet discharge process in a printing process include a process of notifying of the end of a maintenance process and the like.
(2) In the above first and second embodiments, preliminary ejection is executed before a certain time elapses after a sheet discharge process, but the present invention is not limited to this. Another maintenance process may be executed in addition to preliminary ejection. In the above embodiments, a USB cable is used as an interface cable, but the present invention is not limited to this. Any of various publicly known types of cables may be used as the interface cable.
(3) In the above embodiments, the printing apparatus 10 is a so-called serial scan-type printing apparatus using a print head that ejects inks while moving in a direction crossing the conveyance direction of a print medium, but the present invention is not limited to this. The printing apparatus 10 may be a so-called full line-type printing apparatus using a long print head extending over the entire print area of a print medium in the width direction.
(4) In the above first embodiment, whether the amount of electric power stored in the EDLC 302 has reached a predetermined value is determined after the end of a printing process, but the present invention is not limited to this. For example, whether the amount of electric power stored in the EDLC 302 has reached the predetermined value may be determined at a predetermined timing before the end of a printing process, and the EDLC 302 may be charged during the printing process in a case where the amount of electric power stored in the EDLC 302 has not reached the predetermined value. The charging of the EDLC 302 during the printing process is executed during a waiting time provided for each single scan of the print head 404, for example.
(5) While not particularly described in the above first and second embodiments, the determination of whether the USB cable is removed may start immediately after capping is released, and capping may be instantly executed in a case where the USB cable is removed. Specifically, in this case, if it is determined that the USB cable is removed, the process currently executed is stopped, the print head 404 is moved to the waiting position, and then the print head 404 is capped. Note that, in this case, the charging of the EDLC 302 is controlled such that the amount of electric power stored in the EDLC 302 after the release of capping will always be more than or equal to the sum of the amount of electric power required for capping and the amount of electric power required to move the print head 404 to the waiting position.
(6) While not particularly described in the above third embodiment, the configuration may be such that the capacity of the EDLC 302 and the amount of electric power stored therein are checked so that the amount of electric power stored in the EDLC 302 will always be more than or equal to the amount of electric power required for capping in a case where the USB cable is removed in the post-sheet discharge process in S716. In this case, the CPU 216 monitors the states of the charger IC 304 and the EDLC 302 at regular intervals during a printing process so that removal of the USB cable can be instantly detected. After the detection, in a case where the printing process is in progress, the printing operation is instantly stopped and a sheet discharge process is performed. Thereafter, a post-sheet discharge process is executed.
(7) While not particularly described in the above third embodiment, a predetermined maintenance process may be executed as well as a post-activation operation at next activation of the printing apparatus in a state where the USB cable is connected thereto (a state of being supplied with electric power). For example, the maintenance process executed in S826 may be lower in recovery strength than the maintenance process determined to be necessary in S820. Thus, in this case, the maintenance process selected in S820 (the maintenance process determined to be necessary) and the maintenance process executed in S826 are stored in the non-volatile memory 222. Then, next time the printing apparatus 10 is supplied with electric power and activated, a predetermined maintenance process is determined based on the maintenance process determined to be necessary and the maintenance process executed in the last post-discharge process which were stored in the non-volatile memory 222. For example, the maintenance process selected in S820 may be executed as the predetermined maintenance process. Alternatively, a maintenance process corresponding to the difference between the recovery strength of the maintenance process selected in S820 and the recovery strength of the maintenance process executed in S826 may be executed as the predetermined maintenance process. Specifically, for example, in a case where the maintenance process selected in S820 was the first maintenance process and the maintenance process executed in S826 was the second maintenance process, the maintenance process corresponding to the different mentioned above is the third maintenance process.
(8) In the above third embodiment, a wiping process and a suction process are performed as a maintenance process and, in a case where a sufficient amount of electric power is stored in the EDLC 302, a capping process is executed after the maintenance process is executed, but the present invention is not limited to this. The suction process is executed with the print head 404 capped. On the other hand, the wiping process cannot be executed with the print head 404 capped. For this reason, in the above third embodiment, capping is executed after a maintenance process is executed. By limiting a maintenance process only to a process that can be executed in the capped state, for example, it is possible to execute the maintenance process after executing a capping process. This shortens the time required for capping and a maintenance process.
(9) While not particularly described in the above fourth and fifth embodiments, an operation based on a post-activation process or a comprehensive initialization operation may be executed according to the state of the printing apparatus 10 after being activated.

The printing apparatus 10 may fall into an indefinite state due to the user's operation after power-off. For example, it is possible that a print medium remains inside a conveyance path after a termination-time operation is executed by a control process and, after the subsequent power-off, the user performs an operation such as removing the print medium remaining in the conveyance path, thereby changing the apparatus state. In this case, there will be no problem if the user's operation after the power-off is executed correctly and the printing apparatus 10 is in an initialized state (the state after executing an initialization process). However, if an incorrect or incomplete operation is performed, the printing apparatus 10 will fall into an indefinite state.

To address this, a sensor state is stored in the non-volatile memory 222 after a control process is finished and, at the start of a post-activation process, first, the current sensor state and the sensor at the end of the control process are compared with each other. Then, in a case where the two sensor states match each other, the post-activation process is executed. In a case where the two sensor states are different, the post-activation process is skipped, and a comprehensive initialization operation involving executing all initialization operations is executed. Note that the sensor states include, for example, detection results from sensors 1220 (see Fig. 12) capable of detecting a print medium M which are provided near and downstream of the first and second conveyance rollers 1204 and 1214 in the conveyance direction, respectively. Also, the sensor states include a detection result from a sensor 1222 (see Fig. 12) capable of detecting a state where the driving force of the conveyance motor 1208 is transmitted to the cassette roller 1212 by the switching mechanism 1218. Further, the sensor states include a detection result from a sensor (not illustrated) capable of detecting capping of the print head 404 by the cap part 422.

(10) Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

(11) Also, in Fig. 5, for example, a notification that prompts the user not to disconnect the USB cable or the external power source until capping is completed may be issued on the operation panel 208. Also, the notification may be issued after the printing process is started or after the sheet discharge process is started.

(12) The various configurations described in the above embodiment and (1) to (11) above may be combined as appropriate.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A printing apparatus comprising:
a connection unit (214) configured to connect to an external power source (16, 30, 34);
an electric power storage unit (302, 304) configured to store electric power supplied from the external power source through the connection unit;
a printing unit (206) configured to perform printing by ejecting an ink onto a print medium conveyed by a conveyance unit (402);
a recovery unit (408) configured to perform a recovery operation of maintaining or restoring an ink ejection characteristic of the printing unit; and
a control unit (216) configured to execute the recovery operation according to an amount of electric power stored in the electric power storage unit after the supply of electric power from the external power source stops.

2. The printing apparatus according to claim 1, wherein
the recovery unit is a cap part that performs capping as the recovery operation for protecting a nozzle surface of the printing unit in which a nozzle for ejecting the ink is formed, and
the control unit stores electric power supplied from the external power source at a predetermined timing such that the capping can be completed after the supply of electric power from the external power source stops.

3. The printing apparatus according to claim 2, wherein the predetermined timing is before a start of a sheet discharge process of discharging the print medium which is executed after an end of a printing process of performing printing based on a job.

4. The printing apparatus according to claim 3, wherein an amount of electric power to be stored in the electric power storage unit at the predetermined timing includes an amount of electric power required for the sheet discharge process and an amount of electric power required for the capping.

5. The printing apparatus according to claim 2, wherein the predetermined timing is before a start of a printing process of performing printing based on a job.

6. The printing apparatus according to claim 5, wherein an amount of electric power to be stored in the electric power storage unit at the predetermined timing includes an amount of electric power required for the printing process, an amount of electric power required for a sheet discharge process of discharging the print medium which is executed after an end of the printing process, and an amount of electric power required for the capping.

7. The printing apparatus according to claim 4 or 6, wherein
the control unit causes the printing unit to execute preliminary ejection after the sheet discharge process, the preliminary ejection being ink ejection not contributing to printing, and
the amount of electric power to be stored in the electric power storage unit at the predetermined timing further includes an amount of electric power required for the preliminary ejection.

8. The printing apparatus according to claim 2, wherein the predetermined timing is during execution of a printing process of performing printing based on a job.

9. The printing apparatus according to claim 1, wherein
the recovery unit includes
a cap part that executes capping for protecting a nozzle surface of the printing unit in which a nozzle for ejecting the ink is formed, and
a maintenance part that brings an inside of the cap part to a negative pressure by suction, and
the control unit
executes the capping with the cap part and a first operation as the recovery operation, the first operation being an operation of discharging the ink from the nozzle by bringing the inside of the cap part to a negative pressure in a state where the capping is performed, and
performs the recovery operation according to the amount of electric power stored in the electric power storage unit so as to preferentially execute the capping in a case where the supply of electric power from the external power source stops.

10. The printing apparatus according to claim 9, in a case of executing the capping and the first operation according to the amount of electric power stored in the electric power storage unit, the control unit executes the recovery operation after executing the capping.

11. The printing apparatus according to claim 9 or 10, wherein
the maintenance part further wipes the nozzle surface, and
the control unit executes the capping with the cap part, the first operation, and a second operation of wiping the nozzle surface as the recovery operation.

12. The printing apparatus according to claim 11, wherein in a case of executing the capping, the first operation, and the second operation according to the amount of electric power stored in the electric power storage unit, the control unit executes the capping after executing the first operation and the second operation.

13. A printing apparatus comprising:
a connection unit configured to connect to an external power source;
an electric power storage unit configured to store electric power supplied from the external power source through the connection unit;
a printing unit configured to perform printing by ejecting an ink onto a print medium conveyed by a conveyance unit;
a recovery unit configured to perform a recovery operation of maintaining or restoring an ink ejection characteristic of the printing unit; and
a control unit configured to execute an initialization operation of initializing an apparatus state according to an amount of electric power stored in the electric power storage unit in a case where the supply of electric power from the external power source stops.

14. The printing apparatus according to claim 13, wherein
the conveyance unit includes
a feeding roller that feeds a print medium with a driving force of a driving unit,
a conveyance roller that conveys the print medium fed by the feeding roller, the conveyance roller conveying the print medium with the driving force of the driving unit, and
a switching unit configured to switch between a transmitting state of transmitting the driving force of the driving unit to the feeding roller and a non-transmitting state of not transmitting the driving force of the driving unit to the feeding roller, and
the initialization operation includes
an operation of discharging a print medium with the conveyance unit,
an operation of switching to the non-transmitting state with the switching unit, and
an operation of capping the printing unit with the recovery unit.

15. The printing apparatus according to any one of claim 14, wherein in a case where the print medium is not at such a position that the print medium cannot be conveyed by the conveyance roller when the supply of electric power from the external power source stops, the initialization operation is executed after conveying the print medium to the position according to the amount of electric power stored in the electric power storage unit.

16. A method of controlling a printing apparatus including
a connection unit configured to connect to an external power source,
an electric power storage unit configured to store electric power supplied from the external power source through the connection unit,
a printing unit configured to perform printing by ejecting an ink onto a print medium conveyed by a conveyance unit, and
a recovery unit configured to perform a recovery operation of maintaining or restoring an ink ejection characteristic of the printing unit,
the method comprising executing the recovery operation according to an amount of electric power stored in the electric power storage unit after the supply of electric power from the external power source stops.

17. A method of controlling a printing apparatus including
a connection unit configured to connect to an external power source,
an electric power storage unit configured to store electric power supplied from the external power source through the connection unit,
a printing unit configured to perform printing by ejecting an ink onto a print medium conveyed by a conveyance unit, and
a recovery unit configured to perform a recovery operation of maintaining or restoring an ink ejection characteristic of the printing unit,
the method comprising executing an initialization operation of initializing an apparatus state according to an amount of electric power stored in the electric power storage unit in a case where the supply of electric power from the external power source stops.

18. A program for causing a computer to perform a control method according to claim 16 or 17.
